(19) Europäisches Patentamt
European Patent Office
Office européen des brevets

(11) EP 4 190 597 B1

(12) EUROPEAN PATENT SPECIFICATION

(45) Date of publication and mention of the grant of the patent:
**03.09.2025 Bulletin 2025/36**

(21) Application number: **21863973.0**

(22) Date of filing: **20.07.2021**

(51) International Patent Classification (IPC):
***B60C 13/00*** (2006.01) ***B60C 3/04*** (2006.01)
***B60C 11/03*** (2006.01) ***B60C 11/13*** (2006.01)
***B60C 15/06*** (2006.01)

(52) Cooperative Patent Classification (CPC):
**B60C 3/04; B60C 11/033; B60C 15/06;**
**B60C 15/0607;** B60C 11/03; B60C 2011/0353;
B60C 2011/0355; B60C 2013/006; Y02T 10/86

(86) International application number:
**PCT/JP2021/027200**

(87) International publication number:
**WO 2022/049915 (10.03.2022 Gazette 2022/10)**

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.09.2020 JP 2020146663**

(43) Date of publication of application:
**07.06.2023 Bulletin 2023/23**

(73) Proprietor: **Sumitomo Rubber Industries, Ltd.**
**Kobe-shi, Hyogo 651-0072 (JP)**

(72) Inventors:
- **HAMAMURA, Kenji**
  **Kobe-shi, Hyogo 651-0072 (JP)**
- **KAWAI, Hiroki**
  **Kobe-shi, Hyogo 651-0072 (JP)**
- **TOYA, Subaru**
  **Kobe-shi, Hyogo 651-0072 (JP)**

(74) Representative: **Manitz Finsterwald**
**Patent- und Rechtsanwaltspartnerschaft mbB**
**Martin-Greif-Straße 1**
**80336 München (DE)**

(56) References cited:
**EP-A1- 3 677 452**
**WO-A1-2019/054226**
**JP-A- 2002 200 905**
**JP-A- 2002 200 905**
**JP-A- 2009 113 794**
**JP-A- 2015 160 490**
**JP-A- 2015 160 490**
**JP-A- 2017 030 620**
**JP-A- 2017 030 620**
**JP-A- 2017 206 194**
**JP-A- 2019 031 630**
**JP-A- 2020 093 691**
**JP-A- 2020 093 691**
**US-A1- 2017 021 669**
**US-A1- 2019 047 332**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 190 597 B1

## Description

[TECHNICAL FIELD]

The present invention relates to a pneumatic tire.

[BACKGROUND ART]

In recent years, from the viewpoint of increasing interest in environmental issues and economic efficiency, there has been a growing demand for fuel efficiency in automobiles, and there is a strong demand for improved fuel efficiency also in pneumatic tires (hereinafter, simply referred to as "tires") installed in automobiles.

The fuel efficiency of a tire can be evaluated by rolling resistance, and it is known that the smaller the rolling resistance, the better the fuel efficiency of the tire.

Therefore, conventionally, it has been proposed to reduce the rolling resistance by devising the formulation of the rubber composition constituting the tread portion of the tire (for example, Patent Documents 1 to 4).

[PRIOR ART DOCUMENTS]

[PATENT DOCUMENT]

[Patent Document 1] JP2018-178034A
[Patent Document 2] JP2019-089911A
[Patent Document 3] WO2018 / 186367A
[Patent Document 4] JP2019-206643A
[Patent Document 5] US 2017/021669 A1 discloses a pneumatic tire comprising an inner liner, the thickness of the inner liner 17 at least in part of a side portion 18 is 1.5 mm or more when the tire is mounted to a rim, and an internal pressure of 250 kPa or more is applied to the tire, in a case where a sectional width SW of the tire is less than 165 mm, a ratio of the sectional width SW to an outer diameter OD of the tire SW/OD is 0.26 or less; and in a case where the sectional width SW of the tire is 165 mm or more, the sectional width SW and the outer diameter OD of the tire satisfy the relation $OD \geqq 2.135 \times SW + 282.3$.
[Patent Document 6] JP 2017 030620 A provides a pneumatic tire, the contour of the inner side surface of a second apex includes an axially outwardly convex arc C1 extending inwardly from the radially outer end of the contour. The contour of the outer side surface of the second apex 38 includes an axially outwardly convex arc C2 extending inwardly from the radially outer end of the contour and an axially inwardly convex arc C3 located radially inward of the arc C2 and in contact with the arc C2. The difference (Ht-Hw/2) between the height Ht from a bead base line to a contact point of the arc C2 and the arc C3 and the height of half the height Hw from the bead base line to a maximum width position is -10 mm or more and 10 mm or less. The radius of curvature R1 of the arc C1 is larger than the radius of curvature R2 of the arc C2, and the radius of curvature R2 is larger than the radius of curvature R3 of the arc C3.
[Patent Document 7] JP 2015 160490 A discloses a tire comprising a pair of beads, a carcass hung over both side beads and a pair of strips extended approximately outward in a radial direction from the beads along the carcass. The bead comprises a core, a first apex and a second apex. The carcass comprises a carcass ply, and in the carcass ply are formed a main portion and a folded-back portion. The folded-back portion is positioned between the first apex and the second apex. The folded-back portion contacts the main portion further outside in a radial direction than an outer end of the first apex. Positions of outer ends of the strips match a position having the maximum width in a radial direction, or the outer ends of the strips are positioned further inside in the radial direction than the position having the maximum width.
[Patent Document 8] JP 2002 200905 A provides a tire having a bead apex rubber, which is formed into a small triangular shape in its cross section having an oblique surface. In a folded part of a carcass ply, a recess is formed by a lower region and an upper region which successively contact the oblique surface and the ply main body. In the recess, a hard rubber reinforcing apex is disposed and coated with clinch rubber and sidewall rubber.
[Patent Document 9] US 2019/047332 A1 discloses a pneumatic tire comprising a tread, a sidewall and a bead portion having a bead core, a bead reinforcing layer reinforcing the bead portion, and a carcass ply moored on a bead core of the bead portion, wherein the bead reinforcing layer and adjacent members adjacent to the bead reinforcing layer are each composed of a rubber composition containing an amine type antioxidant.
[Patent Document 10] JP 2020 093691 A provides a tire for a motorcycle including a tread, a pair of side walls, a pair of beads, a carcass and a pair of strip apexes. Each apex is positioned on an axial inside of the side wall and positioned

on an axial outside of the apexes of the carcass and the bead.

[Patent Document 11] EP 3 677 452 A1 discloses a pneumatic tire provided with: a bead reinforcing layer provided in the tire-axial-direction outer side of the carcass of a bead part the bead reinforcing layer reinforcing the bead part from the outer side of the carcass; a clinch member provided on the tire-axial-direction outer side of the bead reinforcing layer; and an electronic device. The clinch member has a rigidity lower than that of the bead reinforcing layer, and an electronic component is embedded between the bead reinforcing layer and the clinch member.

[SUMMARY OF INVENTION]

[PROBLEM TO BE SOLVED BY THE INVENTION]

However, it cannot be said that the tire manufactured by the above-described conventional technology is sufficiently reduced in rolling resistance during high-speed running, and has sufficient durability.

Accordingly, an object of the present invention is to provide a pneumatic tire with sufficiently reduced rolling resistance during high-speed running and excellent durability performance.

[MEANS FOR SOLVING THE PROBLEM]

The present discloser has diligently studied the solution to the above-mentioned problem, found that the above-mentioned problem can be solved by the invention described below, and has completed the present disclosure.

The present invention is;

a pneumatic tire having a bead portion, a carcass and a tread, in which a bead reinforcing layer that reinforces the bead portion from the outside of the carcass is provided on the outside of the carcass in the tire axial direction, and the tire satisfies following (formula 1) and (formula 2):

$$1963.4 \leqq (Dt^2 \times \pi / 4) / Wt \leqq 2827.4 \cdots \text{(formula 1)}$$

$$[(V + 1.5 \times 10^7) / Wt] \leqq 2.88 \times 10^5 \cdots \text{(formula 2)},$$

where the cross-sectional width of the tire is Wt (mm), the outer diameter is Dt (mm), and the volume of the space occupied by the tire is the virtual volume V ($mm^3$), when the tire is installed on a standardized rim and the internal pressure is 250 kPa, wherein the virtual volume V can be calculated by the following formula: $V = [(Dt/2)^2 - \{(Dt/2)-Ht\}^2] \times \pi \times Wt$ based on the outer diameter of tire Dt (mm), the tire cross-sectional height Ht (mm) and the cross-sectional width of tire Wt (mm), in the state the tire is installed on a standardized rim, the internal pressure is 250 kPa and no load is applied.

[THE EFFECT OF THE INVENTION]

According to the present invention, it is possible to provide a pneumatic tire with sufficiently reduced the rolling resistance during high-speed running and excellent durability performance.

[BRIEF DESCRIPTION OF THE DRAWING]

[FIG.1] is a schematic cross-sectional view showing a structure in the vicinity of a bead portion in an example of a pneumatic tire according to the present invention.

[FIG.2] is a schematic cross-sectional view showing the structure in the vicinity of the bead portion in another example of the pneumatic tire according to the present invention.

[EMBODIMENTS FOR CARRYING OUT THE INVENTION]

[1] Features of the tire of the present invention

1. Overview

A tire according to the present invention is a pneumatic tire and has the following characteristics.
First, the tire according to the present invention is characterized in that it is a pneumatic tire having a bead portion, a carcass, and a tread, wherein a bead reinforcing layer that reinforces the bead portion from the outside of the carcass is provided outside the carcass in the tire axial direction.
Further, the tire according to the present invention is also characterized in that it satisfies the following (formula 1) and (formula 2);

$$1963.41 \leqq (Dt^2 \times \pi/4) / Wt \leqq 2827.4 \cdot\cdot\cdot\cdot (\text{formula 1})$$

$$[(V + 1.5 \times 10^7) / Wt] \leqq 2.88 \times 10^5 \cdot\cdot\cdot (\text{formula 2}),$$

where Wt (mm) is the cross-sectional width of the tire, Dt (mm) is the outer diameter, and V ($mm^3$) is the virtual volume which is the volume of the space occupied by the tire, when the tire is installed on a standardized rim and the internal pressure is 250 kPa.
By providing the tire shape with the characteristics described above, a tire with sufficiently reduced rolling resistance during high-speed running and sufficiently excellent durability performance can be provided.
In the above description, the "standardized rim" is a rim defined for each tire in the standard system including the standard on which the tire is based. For example, in the case of JATMA (Japan Automobile Tire Association), it is the standard rim in applicable sizes described in the "JATMA YEAR BOOK", in the case of "ETRTO (The European Tire and Rim Technical Organization)", it is "Measuring Rim" described in "STANDARDS MANUAL", and in the case of TRA (The Tire and Rim Association, Inc.), it is "Design Rim" described in "YEAR BOOK ". In the case of tires that are not specified in the standard, it refers a rim that can be assembled and can maintain internal pressure, that is, the rim that does not cause air leakage from between the rim and the tire, and has the smallest rim diameter, and then the narrowest rim width.
Further, the outer diameter Dt of the tire is the outer diameter of the tire installed on a standardized rim, having an internal pressure of 250 kPa and in a no-load state. The cross-sectional width Wt (mm) of the tire is the width of tire installed on a standardized rim, having an internal pressure of 250 kPa and in a no-load state, and is the distance excluding patterns, letters, and the like on the tire side from the linear distance between the side portions (total width of the tire) including all the patterns, letters and the like on the tire side.
Further, the virtual volume V ($mm^3$) of the tire is, specifically, can be calculated by the following formula:

$$V = [(Dt/2)^2 - \{(Dt/2) - Ht\}^2] \times \pi \times Wt$$

based on the outer diameter of tire Dt (mm), the tire cross-sectional height Ht (mm) (distance from the bottom of the bead to the outermost surface of the tread; 1/2 of the difference between the tire outer diameter and the nominal rim diameter), and the cross-sectional width of tire Wt (mm), in the state the tire is installed on a standardized rim, the internal pressure is 250 kPa and no load is applied.

2. Mechanism of effect manifestation in tire according to the present invention

In the tire according to the present invention, the mechanism, by which rolling resistance is sufficiently reduced during high-speed running and excellent durability performance is exhibited, is presumed as follows.

(1) Tire shape

As described above, in the present invention, the cross-sectional width Wt (mm) and the outer diameter Dt (mm) of the said tire are tried to satisfy

$$1963.4 \leqq (Dt^2 \times \pi/4) / Wt \leqq 2827.4 \quad (\text{formula 1}).$$

By increasing the area when the tire is viewed from the lateral direction, $[(Dt/2)^2 \times \pi) = (Dt^2 \times \pi/4)]$, with respect to the cross-sectional width Wt of the tire, and satisfying the numerical range specified in (formula 1), it is considered that the repetition of deformation per unit time is reduced, as a result, the time that can be used for heat exchange is increased, thereby improving the heat release property of the side portion, and the friction between the tread portion and the road surfaces can be reduces. As a result, the rolling resistance of the tire can be reduced (low rolling resistance) and the

durability can be improved.

In (formula 1), $(Dt^2 \times \pi/4) / Wt$ is 1963.4 or more, further preferably 2004 or more, further preferably 2018 or more, further preferably 2027 or more, further preferably 2030 or more, further preferably 2033 or more, and further preferably 2113 or more.

However, since such a tire has a large centrifugal force during high-speed running, the side portion tends to be pulled by the tread portion, where a particularly large centrifugal force acts. However, since the side portion is fixed to the rim at the bead portion, the amount of deformation in the vicinity of the bead portion becomes large, which may lead to damage at the bead portion. In addition, centrifugal force rounds the tread portion, causing a change in the tread pattern profile, which may not sufficiently reduce rolling resistance during high-speed running. Therefore, it can be thought there is room for further improvement.

Therefore, in the present invention, the virtual volume V ($mm^3$) and the cross-sectional width Wt (mm) of the tire are tried to satisfy $[(V + 1.5 \times 10^7) / Wt] \leqq 2.88 \times 10^5$ (formula 2).

In this way, it is considered that, by reducing the virtual volume V of the tire in accordance with the decrease in the cross-sectional width Wt of the tire, and reducing the volume of the tire itself, it is possible to reduce the outer diameter growth rate due to the centrifugal force, and the amount of deformation of the side portion in the bead portion can be reduced, and the rounding of the tread portion can also be suppressed.

$[(V + 1.5 \times 10^7) / Wt]$ is preferably $2.84 \times 10^5$ or less, more preferably $2.83 \times 10^5$ or less, further preferably $2.77 \times 10^5$ or less, further preferably $2.59 \times 10^5$ or less, further preferably $2.55 \times 10^5$ or less, further preferably $2.53 \times 10^5$ or less, further preferably $2.49 \times 10^5$ or less, further preferably $2.47 \times 10^5$ or less, further preferably $2.41 \times 10^5$ or less, further preferably $2.25 \times 10^5$ or less, further preferably $2.23 \times 10^5$ or less, further preferably $2.20 \times 10^5$ or less, further preferably $2.18 \times 10^5$ or less, further preferably $2.17 \times 10^5$ or less, and further preferably $2.15 \times 10^5$ or less.

At this time, it is more preferable that $[(V + 2.0 \times 10^7) / Wt] \leqq 2.88 \times 10^5$ (formula 3), and further preferable that $[(V + 2.5 \times 10^7) / Wt] \leqq 2.88 \times 10^5$ (formula 4).

The above $[(V + 2.0 \times 10^7) / Wt]$ is further preferably $2.82\times10^5$ or less, further preferably $2.80\times10^5$ or less, further preferably $2.78\times10^5$ or less, further preferably $2.76\times10^5$ or less, further preferably $2.75\times10^5$ or less, further preferably $2.63\times10^5$ or less, further preferably $2.46\times10^5$ or less, further preferably $2.45\times10^5$ or less, further preferably $2.44\times10^5$ or less, further preferably $2.43\times10^5$ or less, and further preferably $2.42\times10^5$ or less.

Further, $[(V + 2.5 \times 10^7) / Wt]$ is further preferably $2.84\times10^5$ or less, further preferably $2.75\times10^5$ or less, further preferably $2.74\times10^5$ or less, further preferably $2.71\times10^5$ or less, further preferably $2.70\times10^5$ or less, further preferably $2.69\times10^5$ or less, further preferably $2.68\times10^5$ or less, and further preferably $2.67\times10^5$ or less.

(2) Bead reinforcing layer

In the tire according to the present invention, as described above, the bead reinforcing layer that reinforces the bead portion from the outer side of the carcass is provided on the outer side of the carcass in the tire axial direction. By providing such a bead reinforcing layer, it is possible to further suppress the occurrence of deformation in the vicinity of the bead portion, so it is considered that the durability can be further improved. Moreover, as a result, it is possible to suppress the occurrence of deformation in the side portions, so it is considered that rolling resistance during high-speed running can be improved.

[2] More preferable embodiment of the tire according to the present invention.

The tire according to the present invention can obtain a larger effect by taking the following embodiment.

1. Aspect ratio

The tire according to the present invention is preferably a tire having an aspect ratio of 40% or more, whereby, since the height of the side portion of the tire can be increased to suppress local deformation of the tire, the durability of the tire can be further improved.

The aspect ratio (%) described above can be obtained by the following formula using the cross-sectional height Ht (mm) and the cross-sectional width Wt (mm) of the tire when the internal pressure is 250 kPa.

$$(Ht/Wt) \times 100\ (\%)$$

The aspect ratio is more preferably 45% or more, further preferably 47.5% or more, further preferably 48% or more, further preferably 49% or more, further preferably 50% or more, further preferably 52.5% or more, further preferably 53% or more, further preferably 55% or more, further preferably 58% or more, and further preferably 59% or more. There is

no particular upper limit, but for example, it is 100% or less.

2. bead reinforcing layer

When reinforcing the bead portion with the bead reinforcing layer, it is preferable that the loss tangent (tan δ) of the bead reinforcing layer is small from the viewpoint of suppressing heat generation of the bead reinforcing layer. On the other hand, from the viewpoint of suppressing deformation in the vicinity of the bead portion, it is preferable that the rigidity of the bead reinforcing layer, that is, the complex elastic modulus (E*) is large.

Therefore, a favorable relationship between the loss tangent (tan δ) and the complex elastic modulus (E*: MPa) in the bead reinforcing layer has been examined, and it was found that the ratio (tan δ/E*) of the loss tangent (tan δ) to the complex elastic modulus (E*: MPa), of the bead reinforcing layer, measured under the conditions of the temperature of 70°C, the frequency of 10 Hz, the initial strain of 5%, and the dynamic strain rate of 1%, is preferably 0.005 or less. The (tan δ/E*) is more preferably 0.002 or less, further preferably 0.001 or less.

Thereby, heat generation of the bead reinforcing layer during rolling can be suppressed as well as the rigidity of the bead reinforcing layer can be secured satisfactorily, and the growth of the outer diameter of the tire can be further suppressed. It is considered that, as a result, the rolling resistance during high-speed running can be sufficiently reduced, and the durability can be sufficiently improved.

Note that the loss tangent (tan δ) and the complex elastic modulus (E*) described above are taken for rubber cut from at least radially outside the groove bottom of the tire, preferably radially outside half the depth of the deepest circumferential groove. Specifically, for example, it can be measured using a viscoelasticity measuring device such as "Eplexor (registered trademark)" manufactured by GABO.

In a cross-sectional view of the tire in the radial direction, the height of the bead reinforcing layer from below the bead core is preferably 45% or less of the height from below the bead core to the outermost surface of the tread. It was found that, by this, a more pronounced effect can be obtained.

In addition, the larger the area of the side portion of the tire, the greater the amount of heat generated in the side portion where the bead reinforcing layer is arranged, and the more likely the tire is to deteriorate in durability.

The present discloser thought that, in order to prevent this, it is necessary to reduce the heat generation factor of the bead reinforcing layer in accordance with the expansion of the area of the side portion, and has examined the relationship between (tan δ/E*), which is an index related to the heat generation of the bead reinforcing layer, and (V/Wt), which is an index relating to the area of the side portion. As a result, it was found that if

$$(\tan\delta/E^*) \times (V/Wt) \leqq 400 \text{ (formula 5)}$$

is satisfied, the heat generation at the side portion can be suppressed, and the durability is further improved. The [(tan δ/E*) × (V/Wt)] is preferably 368 or less, more preferably 339 or less, and further preferably 309 or less.

It was also found that

$$(\tan\delta/E^*) \times (V/Wt) \leqq 300 \text{ (formula 6)}$$

is more preferred. The [(tan δ/E*) × (V/Wt)] is more preferably 272 or less, further preferably 252 or less, further preferably 235 or less, further preferably 223 or less, further preferably 202 or less, and further preferably 184 or less.

3. Side portion

The tire according to the present invention preferably has a sidewall formed of rubber composition having a loss tangent (tan δ) of 0.08 or less, more preferably 0.06 or less, measured under conditions of the temperature of 70°C, the frequency of 10 Hz, the initial strain of 5%, and the dynamic strain rate of 1%, in the side portion. As a result, it is possible to suppress deformation of the side portion caused by heat generated during running. As a lower limit, the tan δ is preferably 0.02 or more, for example.

The complex elastic modulus (E*: MPa) of this rubber composition measured under the same conditions is preferably 4.0 MPa or less, more preferably 3.5 MPa or less. As a result, the soft sidewalls are supported by the bead reinforcement layer, the side portion is prevented from being stretched due to centrifugal force during running, and when an impact is applied, by exhibiting flexibility, the impact force can be relaxed, and the durability can be further improved. As a lower limit, it is preferably 2.0 MPa or more, for example, and more preferably 2.5 MPa or more.

4. Clinch portion

In the tire according to the present invention, since the bead reinforcing layer is provided on the outer side of the carcass in the tire axial direction, the deformation during rolling becomes a movement centered on the joint with the rim, and the degree of deformation at the clinch portion is larger than before, and it is considered that the heat generation also becomes larger.

In order to suppress the heat generation in the clinch portion, it is preferable that the clinch portion is formed of a rubber composition having the loss tangent (tan δ) measured under the conditions of the temperature of 70°C, the frequency of 10 Hz, the initial strain of 5%, and the dynamic strain rate of 1% being 0.10 or less, more preferably 0.08 or less. As a result, heat generation in the clinch portion can be reduced and heat transfer to the sidewall (side portion) can be suppressed, so durability can be improved and rolling resistance can be reduced. In addition, as a lower limit, it is preferably 0.03 or more, for example, and more preferably 0.04 or more.

The complex elastic modulus (E*: MPa) of this rubber compositio n measured under the same conditions is preferably 8.0 MPa or more, more preferably 9.0 MPa or more. As a result, the rigidity of the clinch portion, on which deformation tends to concentrate during rolling, is inc reased, so that the occurrence of deformation itself can be suppressed an d heat generation can be reduced. As an upper limit, it is preferably 1 5.0 MPa or less, for example, and more preferably 12 MPa or less.

5. Grooves in the tread

The tire according to the present invention has a circumferential groove continuously extending in the tire circumferential direction in the tread portion. The ratio of the groove width $L_{80}$ at a depth of 80% of the maximum depth of the circumferential groove to the groove width $L_0$ of the circumferential groove on the ground contact surface of the tread portion ($L_{80}$ / $L_0$) is preferably 0.3 to 0.7. As a result, it is possible to suppress the movement of the entire land portion on the bottom surface of the land portion of the tread portion, and, thereby it is considered that occurrence of the chipping in the tread portion can be suppressed. The ratio is more preferably 0.35 to 0.65, further preferably 0.40 to 0.60, and particularly preferably 0.45 to 0.55. The circumferential grooves may be grooves extending continuously in the tire circumferential direction, and non-linear grooves such as zigzag grooves and wavy grooves are also included in the circumferential grooves.

The above-mentioned $L_0$ and $L_{80}$ refer to the linear distance ($L_0$) between the groove edges on the tread surface of the tread circumferential groove of a tire, and to the minimum distance ($L_{80}$) between the groove walls at a position where the groove depth is 80%, respectively, in a state where the tire is installed on a standardized rim, the internal pressure is 250 kPa, and no load is applied. To put it simply, they can be obtained by putting the bead portion of the section cut out in the radial direction with a width of 2 to 4 cm in a pressed state according to the rim width.

It is preferable that the tread portion has a plurality of circumferential grooves, and the total cross-sectional area of the plurality of circumferential grooves is 10 to 30% of the cross-sectional area of the tread portion. It is considered that this makes it possible to suppress the movement of the tread portion, and occurrence of the chipping in the tread portion during high-speed running can be suppressed. It is more preferably 15 to 27%, further preferably 18 to 25%, and particularly preferably 21 to 23%.

The cross-sectional area of the circumferential groove refers to the total value of the area composed of a straight line connecting the ends of the tread circumferential groove and a groove wall in a tire installed on a standardized rim, having an internal pressure of 250 kPa and in a no-load state. To put it simply, they can be obtained by putting the bead portion of the section cut out in the radial direction with a width of 2 to 4 cm in a pressed state according to the rim width.

Further, it is preferable that the tread portion has a plurality of lateral grooves extending in the tire axial direction, and the total volume of the plurality of lateral grooves is 2.0 to 5.0% of the volume of the tread portion. It is considered that this makes it possible to suppress the movement of the tread portion, suppress the uneven wear, and improve the durability. It is more preferably 2.2 to 4.0%, further preferably 2.5 to 3.5%, and particularly preferably 2.7 to 3.0%.

The volume of the lateral groove described above refers to the total volume of the volume composed of the surface connecting the ends of the lateral groove and the groove wall in a tire installed on a standardized rim, having an internal pressure of 250 kPa and in a no-load state. To put it simply, it can be obtained by calculating the volume of each lateral groove and multiplying it by the number of grooves, in a state where the bead portion of the section cut out in the radial direction with a width of 2 to 4 cm is pressed down according to the rim width. Further, the volume of the tread portion can be calculated by calculating the area of the portion excluding the lateral groove from the section and multiplying it by the outer diameter, then obtaining the difference between the calculation result and the volume of the lateral groove.

In order to suppress occurrence of the chipping in the tread portion and further improve the durability, it is preferred that at least one of these lateral grooves has ratio of groove width Gw to groove depth Gd (Gw/Gd) of 0.50 to 0. 80. The ratio is more preferably 0.53 to 0.77, further preferably 0.55 to 0.75, and particularly preferably 0.60 to 0.70.

The groove width and groove depth of the lateral groove described above refer to the maximum length of the

straight lines connecting the tread surface ends of the lateral groove, which are perpendicular to the groove direction, and to the maximum depth of the lateral groove, respectively, in the tire in a state where the internal pressure is 250 kPa and no load is applied. To put it simply, it can be calculated in a state where the bead portion of the section cut out in the radial direction with a width of 2 to 4 cm is put down in a pressed state according to the rim width.

6. Tire shape

In the tire of the present invention, when the tire is installed on a standardized rim and the internal pressure is 250 kPa, the specific outer diameter Dt (mm) is preferably, for example, 515 mm or more, more preferably 558 mm or more, further preferably 585 mm or more, further preferably 649 mm or more, further preferably 658 mm or more, further preferably 663 mm or more, further preferably 664 mm or more, further preferably 665 mm or more, further preferably 672 mm or more, and most preferably 673 mm or more.

On the other hand, it is preferably less than 843 mm, more preferably 733 mm or less, further preferably less than 725 mm, further preferably 718 mm or less, further preferably 717 mm or less, further preferably 716 mm or less, further preferably 714 mm or less, further preferably 710 mm or less, further preferably less than 707 mm, further preferably 692 mm or less, further preferably 690 mm or less, further preferably less than 685 mm, further preferably 684 mm or less, further preferably 680 mm or less, further preferably 679 mm or less, and further preferably 674 mm or less.

The specific cross-sectional width Wt (mm) is preferably 115 mm or more, more preferably 130 mm or more, further preferably 150 mm or more, further more preferably 170 mm or more, further more preferably 175 mm or more, further more preferably 176 mm or more, further more preferably 177 mm or more, further more preferably 178 mm or more, further more preferably 181 mm or more, further more preferably 182 mm or more, and particularly preferably 185 mm, and most preferably 193 mm or more.

On the other hand, it is preferably less than 305 mm, more preferably less than 245 mm, further preferably 235 mm or less, further preferably 233 mm or less, further preferably 231 mm or less, further preferably 229 mm or less, further preferably 225 mm or less, further preferably less than 210 mm, further preferably less than 205 mm, further preferably 201 mm or less, further preferably 200 mm or less, further preferably less than 200 mm, and further preferably 199 mm or less.

The specific cross-sectional height Ht (mm) is, for example, preferably 37 mm or more, more preferably 69 mm or more, further preferably 70 mm or more, further preferably 78 mm or more, further preferably 79 mm or more, further preferably 80 mm or more, further preferably 87 mm or more, further preferably 88 mm or more, further preferably 90 mm or more, further preferably 95 mm or more, further preferably 96 mm or more, further preferably 98 mm or more, and further preferably 99 mm or more.

On the other hand, it is preferably less than 180 mm, more preferably 116 mm or less, further preferably 113 mm or less, further preferably less than 112 mm, further preferably 105 mm or less, further preferably 101 mm or less, and further preferably less than 101 mm.

The specific virtual volume V is preferably 13,000,000 $mm^3$ or more, more preferably 23,136,067 $mm^3$ or more, further preferably 23,206,160 $mm^3$ or more, further preferably 23,377,471 $mm^3$ or more, further preferably 28,575,587 $mm^3$ or more, further preferably 28,813,525 $mm^3$ or more, further preferably 29,000, 000 $mm^3$ or more, further preferably 29,087,378 $mm^3$ or more, further preferably 29,823,416 $mm^3$ or more, further preferably 30,327,983 $mm^3$ or more, further preferably 34,466,507 $mm^3$ or more, further preferably 36,000,000 $mm^3$ or more, further preferably 36,015,050 $mm^3$ or more, further preferably 36,140,254 $mm^3$ or more, further preferably 36,203,610 $mm^3$ or more, further preferably 36,260,445 $mm^3$ or more, and further preferably 37,040,131 $mm^3$ or more.

On the other hand, it is preferably less than 66,000,000 $mm^3$, more preferably 51,283,296 $mm^3$ or less, further preferably less than 44,000,000 $mm^3$, further preferably 43,478,150 $mm^3$ or less, further preferably 42,045,141 $mm^3$ or less, further preferably 40,755,756 $mm^3$ or less, and further preferably 38,800,000 $mm^3$ or less.

Further, in the tire of the present invention, considering the stability of the riding comfort during traveling, ($Dt - 2 \times Ht$) is preferably 450 mm or more, more preferably 457 mm or more, further preferably 458 mm or more, further preferably 470 mm or more, further preferably 480 mm or more, further preferably 482 mm or more, and further preferably 483 mm or more.

On the other hand, considering the deformation of the tread portion, it is preferably less than 560 mm, more preferably 559 mm or less, further preferably 558 mm or less, further preferably 534 mm or less, further preferably 533 mm or less, further preferably less than 530 mm, further preferably less than 510 mm, further preferably 508 mm or less, and further preferably 507 mm or less.

[3] Embodiments of the present invention

Hereinafter, the present invention will be specifically described based on the embodiments.

1. Rubber composition forming bead reinforcing layer

In the present invention, the rubber composition forming the bead reinforcing layer can be obtained by appropriately adjusting the types and amounts of various compounding materials such as rubber components, fillers, softeners, and vulcanization accelerators described below.

(1) Rubber component

In the present embodiment, as the rubber component, a rubber (polymer) generally used for manufacturing tires such as styrene-butadiene rubber (SBR), isoprene-based rubber, butadiene rubber (BR), and nitrile rubber (NBR) is used. Among these, it is preferable to contain isoprene-based rubber and styrene-butadiene rubber (SBR). In these rubbers, the rubber phases can be phase-separated and entangled with each other, so that the strain inside the rubber can be reduced.

(a) Isoprene-based rubber

The content (total content) of the isoprene-based rubber in 100 parts by mass of the rubber component is preferably more than 40 parts by mass, more preferably more than 60 parts by mass, and further preferably more than 65 parts by mass, from the viewpoint of good low heat generation and durability. On the other hand, it is preferably less than 90 parts by mass, more preferably less than 80 parts by mass, and further preferably less than 75 parts by mass, and 70 parts by mass is particularly preferred. Examples of the isoprene-based rubber include natural rubber (NR), isoprene rubber (IR), reformed NR, modified NR, and modified IR. Among them, NR is preferable from the viewpoint of excellent strength.

As the NR, for example, SIR20, RSS # 3, TSR20 and the like, which are common in the tire industry, can be used. The IR is not particularly limited, and for example, IR 2200 and the like, which are common in the tire industry, can be used. Reformed NR includes deproteinized natural rubber (DPNR), high-purity natural rubber (UPNR), and the like. Modified NR includes epoxidized natural rubber (ENR), hydrogenated natural rubber (HNR), grafted natural rubber, and the like. Modified IR includes epoxidized isoprene rubber, hydrogenated isoprene rubber, grafted isoprene rubber, and the like. These may be used alone or in combination of two or more.

(b) SBR

The content of SBR in 100 parts by mass of the rubber component is preferably more than 10 parts by mass, more preferably more than 20 parts by mass, further preferably more than 25 parts by mass, and further preferably 30 parts by mass or more.

On the other hand, it is preferably less than 60 parts by mass, more preferably less than 40 parts by mass, and further preferably less than 35 parts by mass,.

The weight average molecular weight of SBR is, for example, more than 100,000 and less than 2 million. The styrene content of SBR is preferably more than 5% by mass, more preferably more than 10% by mass, and further preferably more than 20 % by mass. On the other hand, it is preferably less than 50% by mass, more preferably less than 40% by mass, and further preferably less than 35% by mass. The vinyl bond amount (1,2-bonded butadiene unit amount) of SBR is, for example, more than 5% by mass and less than 70% by mass. The structure identification of SBR (measurement of styrene content and vinyl bond amount) can be performed using, for example, an apparatus of the JNM-ECA series manufactured by JEOL Ltd.

The SBR is not particularly limited, and for example, emulsion-polymerized styrene-butadiene rubber (E-SBR), solution-polymerized styrene-butadiene rubber (S-SBR) and the like can be used. The SBR may be either a non-modified SBR or a modified SBR, and these may be used alone or in combination of two or more.

The modified SBR may be any SBR having a functional group that interacts with a filler such as silica. Examples thereof include

end-modified SBR (end-modified SBR having the above functional group at the terminal) in which at least one end of the SBR is modified with a compound having the above functional group (modifying agent),
main chain modified SBR having the functional group in the main chain,
main chain terminal modified SBR having the functional group at the main chain and the terminal (for example, a main chain terminal modified SBR having the above functional group to the main chain and having at least one end modified with the above modifying agent), and
end-modified SBR which is modified (coupled) with a polyfunctional compound having two or more epoxy groups in the molecule, and into which an epoxy group or hydroxyl group has been introduced,

Examples of the functional group include an amino group, an amide group, a silyl group, an alkoxysilyl group, an

isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. In addition, these functional groups may have a substituent.

Further, as the modified SBR, for example, an SBR modified with a compound (modifying agent) represented by the following formula can be used.

[Chemical 1]

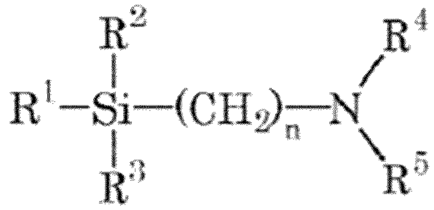

In the formula, $R^1$, $R^2$ and $R^3$ are the same or different and represent alkyl group, alkoxy group, silyloxy group, acetal group, carboxyl group (-COOH), mercapto group (-SH) or derivatives thereof. $R^4$ and $R^5$ are the same or different and represent hydrogen atoms or alkyl group. $R^4$ and $R^5$ may be combined to form a ring structure with nitrogen atoms. n represents an integer.

As the modified SBR modified by the compound (modifying agent) represented by the above formula, SBR, in which the polymerization end (active end) of the solution-polymerized styrene-butadiene rubber (S-SBR) is modified by the compound represented by the above formula (for example, modified SBR described in JP-A-2010-111753), can be used.

As $R^1$, $R^2$ and $R^3$, an alkoxy group is suitable (preferably an alkoxy group having 1 to 8 carbon atoms, more preferably an alkoxy group having 1 to 4 carbon atoms). As $R^4$ and $R^5$, an alkyl group (preferably an alkyl group having 1 to 3 carbon atoms) is suitable. n is preferably 1 to 5, more preferably 2 to 4, and even more preferably 3. Further, when $R^4$ and $R^5$ are combined to form a ring structure together with a nitrogen atom, a 4- to 8-membered ring is preferable. The alkoxy group also includes a cycloalkoxy group (cyclohexyloxy group, and the like) and an aryloxy group (phenoxy group, benzyloxy group, and the like).

Specific examples of the above modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.

Further, as the modified SBR, a modified SBR modified with the following compound (modifying agent) can also be used. Examples of the modifying agent include

polyglycidyl ethers of polyhydric alcohols such as ethylene glycol diglycidyl ether, glycerin triglycidyl ether, trimethylolethanetriglycidyl ether, and trimethylolpropane triglycidyl ether;

polyglycidyl ethers of aromatic compounds having two or more phenol groups such as diglycidylated bisphenol A;

polyepoxy compounds such as 1,4-diglycidylbenzene, 1,3,5-triglycidylbenzene, and polyepoxidized liquid polybutadiene;

epoxy group-containing tertiary amines such as 4,4' -diglycidyl-diphenylmethylamine, and 4,4'-diglycidyl-dibenzylmethylamine;

diglycidylamino compounds such as diglycidylaniline, N, N'-diglycidyl-4-glycidyloxyaniline, diglycidyl orthotoluidine, tetraglycidylmetaxylenidiamine, tetraglycidylaminodiphenylmethane, tetraglycidyl-p-phenylenediamine, diglycidylaminomethylcyclohexane, and tetraglycidyl-1,3-bisaminomethylcyclohexane;

amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid chloride;

epoxy group-containing silane compounds such as 1,3-bis-(glycidyloxypropyl) -tetramethyldisiloxane, and (3-glycidyloxypropyl) - pentamethyldisiloxane;

sulfide group-containing silane compound such as (trimethylsilyl) [3- (trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3-(tributoxysilyl) propyl] sulfide, (trimethylsilyl) [3- (methyldimethoxysilyl) propyl] sulfide, (trimethylsilyl) [3- (methyldiethoxysilyl)

propyl] sulfide, (trimethylsilyl) [3- (methyldipropoxysilyl) propyl] sulfide, and (trimethylsilyl) [3- (methyldibutoxysilyl) propyl] sulfide;

N-substituted aziridine compound such as ethyleneimine and propyleneimine;

alkoxysilanes such as methyltriethoxysilane, N, N-bis (trimethylsilyl) -3-aminopropyltrimethoxysilane, N, N-bis (trimethylsilyl) -3-aminopropyltriethoxysilane, N, N-bis (trimethylsilyl) aminoethyltrimethoxysilane, and N, N-bis (trimethylsilyl) aminoethyltriethoxysilane;

(thio) benzophenone compound having an amino group and/or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis-(tetraethylamino) benzophenone;

benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde;

N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;

N- substituted piperidone such as methyl-2-piperidone, N-vinyl-2-piperidone, and N-phenyl-2-piperidone;

N-substituted lactams such as N-methyl -ε-caprolactam, N-phenyl-ε-caprolactum, N-methyl-ω-laurilolactum, N -vinyl-w-laurilolactum, N-methyl-β-propiolactam, and N-phenyl-β-propiolactam; and

N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 -bis(methylethylamino)-4-heptanone. The modification with the above compound (modifying agent) can be carried out by a known method.

As the SBR, for example, SBR manufactured and sold by Sumitomo Chemical Co., Ltd., JSR Corporation, Asahi Kasei Co., Ltd., Nippon Zeon Co., Ltd, etc. can be used. The SBR may be used alone or in combination of two or more. other

(c) Other rubber components

Further, as another rubber component, the rubber composition may contain a rubber (polymer) generally used in the production of tires, such as butadiene rubber (BR) and nitrile rubber (NBR).

(2) Compounding materials other than rubber components

(a) Filler

In the present embodiment, the rubber composition preferably contains a filler. Specific examples of fillers include carbon black, graphite, silica, calcium carbonate, talc, alumina, clay, aluminum hydroxide, and mica. Among these, carbon black is preferably used as a reinforcing agent. It is also preferable to use silica as a reinforcing agent, if necessary. In this case, it is preferable to use the silica together with a silane coupling agent.

(a-1) Carbon black

The rubber composition preferably contains carbon black. The content of carbon black is, for example, preferably 10 parts by mass or more, more preferably 50 parts by mass or more, and further preferably 55 parts by mass or more with respect to 100 parts by mass of the rubber component. On the other hand, it is preferably 100 parts by mass or less, more preferably 90 parts by mass or less, further preferably 80 parts by mass or less, and further preferably 70 parts by mass or less.

The carbon black is not particularly limited, and examples thereof includes furnace black (furnace carbon black) such as SAF, ISAF, HAF, MAF, FEF, SRF, GPF, APF, FF, CF, SCF and ECF; acetylene black (acetylene carbon black); thermal black (thermal carbon black) such as FT and MT; and channel black (channel carbon black) such as EPC, MPC and CC. These may be used alone or in combination of two or more.

Nitrogen adsorption specific surface area ($N_2SA$) of carbon black is, for example, 30 $m^2/g$ or more and 250 $m^2/g$ or less. The amount of dibutyl phthalate (DBP) absorbed by carbon black is, for example, 50 ml/100 g or more and 250 ml/100 g or less. The nitrogen adsorption specific surface area of carbon black is measured according to ASTM D4820-93, and the amount of DBP absorbed is measured according to ASTM D2414-93.

The specific carbon black is not particularly limited, and examples thereof include N134, N110, N220, N234,

N219, N339, N330, N326, N351, N550, and N762. Commercially available products include, for example, products of Asahi Carbon Co., Ltd., Cabot Japan Co., Ltd., Tokai Carbon Co., Ltd., Mitsubishi Chemical Corporation, Lion Corporation, Shin Nikka Carbon Co., Ltd., Columbia Carbon Co., Ltd., etc. These may be used alone or in combination of two or more.

(a-2) Silica

It is preferable that the rubber composition further contain silica, if necessary. The BET specific surface area of the silica is preferably more than 140 $m^2/g$, more preferably more than 160 $m^2/g$, from the viewpoint of obtaining good durability performance. On the other hand, from the viewpoint of obtaining good rolling resistance at high-speed running, it is preferably less than 250 $m^2/g$, and more preferably less than 220 $m^2/g$. Moreover, the content of the silica with respect to 100 parts by mass of the rubber component is preferably 5 parts by mass or more, more preferably 15 parts by mass or more, and further preferably 25 parts by mass or more. On the other hand, it is preferably 50 parts by mass or less, more preferably 40 parts by mass or less, and further preferably 30 parts by mass or less. The above-mentioned BET specific surface area is the value of $N_2SA$ measured by the BET method according to ASTM D3037-93.

Examples of silica include dry silica (anhydrous silica) and wet silica (hydrous silica). Among them, wet silica is preferable because it has large number of silanol groups.

As the silica, for example, products of Degussa, Rhodia, Tosoh Silica Co., Ltd., Solvay Japan Co., Ltd., Tokuyama Corporation, etc. can be used.

(a-3) Silane coupling agent

As described above, when using silica, it is preferable to use a silane coupling agent together. The silane coupling agent is not particularly limited. Examples of the silane coupling agent include

sulfide-based ones such as bis(3-triethoxysilylpropyl)tetrasulfide, bis (2-triethoxysilylethyl)tetrasulfide, bis (4-triethoxysilylbutyl)tetrasulfide, bis(3-trimethoxysilylpropyl) tetrasulfide, bis(2-trimethoxysilylethyl) tetrasulfide, bis(2-triethoxysilylethyl)trisulfide, bis(4-trimethoxysilylbutyl) trisulfide, bis(3-triethoxysilylpropyl)disulfide, bis(2-triethoxysilylethyl) disulfide, bis(4-triethoxysilylbutyl) disulfide, bis(3-trimethoxysilylpropyl) disulfide, bis(2-trimethoxysilylethyl)disulfide, bis(4-trimethoxysilylbutyl)disulfide, 3-trimethoxysilylpropyl-N, N-dimethylthiocarbamoyltetrasulfide, 2-triethoxysilylethyl-N, N-dimethylthiocarbamoyltetrasulfide, and 3-triethoxysilylpropylmethacrylatemonosulfide;
mercapto-based ones such as 3-mercaptopropyltrimethoxysilane, 2-mercaptoethyltriethoxysilane, and NXT and NXT-Z manufactured by Momentive;
vinyl-based ones such as vinyl triethoxysilane, and vinyl trimethoxysilane;
amino-based ones such as 3-aminopropyltriethoxysilane and 3-aminopropyltrimethoxysilane;
glycidoxy-based ones such as γ-glycidoxypropyltriethoxysilane and γ-glycidoxypropyltrimethoxysilane;
nitro-based ones such as 3-nitropropyltrimethoxysilane, and 3-nitropropyltriethoxysilane; and
chloro-based ones such as 3-chloropropyltrimethoxysilane and 3-chloropropyltriethoxysilane. These may be used alone or in combination of two or more.

As the silane coupling agent, for example, products of Degussa, Momentive, Shinetsu Silicone Co., Ltd., Tokyo Chemical Industry Co., Ltd., Azumax Co., Ltd., Toray Dow Corning Co., Ltd., etc. can be used.

The content of the silane coupling agent is, for example, more than 3 parts by mass and less than 25 parts by mass with respect to 100 parts by mass of silica.

(a-4) Other fillers

The rubber composition may further contain fillers such as graphite, calcium carbonate, talc, alumina, clay, aluminum hydroxide, and mica, which are generally used in the tire industry, in addition to the above-mentioned carbon black and silica. These contents are, for example, more than 0.1 part by mass and less than 200 parts by mass with respect to 100 parts by mass of the rubber component.

(b) Resin component

(b-1) Curable resin component

From the viewpoint of ensuring the rigidity of the bead reinforcing layer, the rubber composition preferably contains a curable resin component. The content of the resin component is, for example, preferably 4 parts by mass or

more, more preferably 6 parts by mass or more, further preferably 8 parts by mass or more, further preferably 12 parts by mass or more, and further preferably 17 parts by mass or more with respect to 100 parts by mass of the rubber component. On the other hand, it is preferably 30 parts by mass or less, and more preferably 20 parts by mass or less.

Examples of the curable resin component include modified resorcinol resins and modified phenolic resins. Examples of specific modified resorcinol resins include Sumikanol 620 (modified resorcinol resin) manufactured by Taoka Chemical Co., Ltd. Examples of modified phenolic resins include PR12686 (Cashew oil-modified phenolic resin) manufactured by Sumitomo Bakelite Co., Ltd.

When using the modified resorcinol resin, it is preferable to contain a methylene donor together as a curing agent, if necessary. Examples of methylene donors include hexamethylenetetramine (HMT), hexamethoxymethylolmelamine (HMMM) and hexamethylolmelamine pentamethyl ether (HMMPME). It is preferable to contain, for example, about 5 parts by mass or more and 15 parts by mass or less with respect to 100 parts by mass of the curable resin component.

As a specific methylene donor, for example, Sumikanol 507 manufactured by Taoka Chemical Co., Ltd. can be used.

(b-1) Resin component

From the viewpoint of workability (imparting tackiness), the rubber composition preferably contains a resin component as necessary. The resin component may be solid or liquid at room temperature, and specific examples of resin components include styrene resin, coumarone resin, terpene resin, C5 resin, C9 resin, C5C9 resin, and acrylic resin. Two or more kinds of the resin components may be used in combination. The content of the resin component with respect to 100 parts by mass of the rubber component is preferably more than 2 parts by mass and less than 45 parts by mass, and more preferably less than 30 parts by mass.

The styrene resin is a polymer using a styrene monomer as a constituent monomer, and examples thereof include a polymer obtained by polymerizing a styrene monomer as a main component (50% by mass or more). Specifically, it includes homopolymers obtained by individually polymerizing styrene monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, etc.), copolymers obtained by copolymerizing two or more styrene monomers, and, in addition, copolymers obtained by copolymerizing a styrene monomer and other monomers that can be copolymerized with the styrene monomer.

Examples of the other monomers include acrylonitriles such as acrylonitrile and methacrylate; unsaturated carboxylic acids such as acrylic acid and methacrylic acid; unsaturated carboxylic acid esters such as methyl acrylate and methyl methacrylate; dienes such as chloroprene, butadiene, and isoprene, olefins such as 1-butene and 1-pentene; and α, β-unsaturated carboxylic acids such as maleic anhydride and acid anhydrides thereof.

As the coumarone-based resin, coumarone-indene resin is preferably used. Coumarone-indene resin is a resin containing coumarone and indene as monomer components constituting the skeleton (main chain) of the resin. Examples of the monomer component contained in the skeleton other than coumarone and indene include styrene, α-methylstyrene, methylindene, and vinyltoluene.

The content of the coumarone-indene resin is, for example, more than 1.0 part by mass and less than 50.0 parts by mass with respect to 100 parts by mass of the rubber component.

The hydroxyl value (OH value) of the coumarone-indene resin is, for example, more than 15 mgKOH/g and less than 150 mgKOH/g. The OH value is the amount of potassium hydroxide required to neutralize acetic acid bonded to a hydroxyl group when 1 g of the resin is acetylated, and is expressed in milligrams. It is a value measured by potentiometric titration method (JIS K 0070: 1992).

The softening point of the coumarone-indene resin is, for example, higher than 30 °C and lower than 160 °C. The softening point is the temperature at which the ball drops when the softening point defined in JIS K 6220-1: 2001 is measured by a ring-ball type softening point measuring device.

Examples of the terpene resins include polyterpenes, terpene phenols, and aromatic-modified terpene resins. Polyterpene is a resin obtained by polymerizing a terpene compound and a hydrogenated product thereof. The terpene compound is a hydrocarbon having a composition of $(C_5H_8)_n$ or an oxygen-containing derivative thereof, which is a compound having a terpene classified as monoterpenes ($C_{10}H_{16}$), sesquiterpenes ($C_{15}H_{24}$), diterpenes ($C_{20}H_{32}$), etc. as the basic skeleton. Examples thereof include α-pinene, β-pinene, dipentene, limonene, myrcene, alloocimene, osimene, α-phellandrene, α-terpinene, γ-terpinene, terpinolene, 1,8-cineol, 1,4-cineol, α-terpineol, β-terpineol, and γ-terpineol.

Examples of the polyterpene include terpene resins such as α-pinene resin, β-pinene resin, limonene resin, dipentene resin, and β-pinene/limonene resin, which are made from the above-mentioned terpene compound, as well as hydrogenated terpene resin obtained by hydrogenating the terpene resin. Examples of the terpene phenol include a resin obtained by copolymerizing the above-mentioned terpene compound and the phenol compound, and a resin obtained by hydrogenating above-mentioned resin. Specifically, a resin obtained by condensing the above-mentioned terpene compound, the phenol compound and formalin can be mentioned. Examples of the phenol compound include phenol,

bisphenol A, cresol, and xylenol. Examples of the aromatic-modified terpene resin include a resin obtained by modifying a terpene resin with an aromatic compound, and a resin obtained by hydrogenating the above-mentioned resin. The aromatic compound is not particularly limited as long as it is a compound having an aromatic ring, and examples thereof include phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthols; styrene derivatives such as styrene, alkylstyrene, alkoxystyrene, unsaturated hydrocarbon group-containing styrene; coumarone; and indene.

The C5 resin refers to a resin obtained by polymerizing a C5 fraction. Examples of the C5 fraction include petroleum fractions having 4 to 5 carbon atoms such as cyclopentadiene, pentene, pentadiene, and isoprene. As the C5-based petroleum resin, a dicyclopentadiene resin (DCPD resin) is preferably used.

The C9 resin refers to a resin obtained by polymerizing a C9 fraction, and may be hydrogenated or modified. Examples of the C9 fraction include petroleum fractions having 8 to 10 carbon atoms such as vinyltoluene, alkylstyrene, indene, and methyl indene. As the specific examples, a coumarone-indene resin, a coumarone resin, an indene resin, and an aromatic vinyl resin are preferably used. As the aromatic vinyl resin, a homopolymer of $\alpha$-methylstyrene or styrene or a copolymer of $\alpha$-methylstyrene and styrene is preferable because it is economical, easy to process, and excellent in heat generation. A copolymer of $\alpha$-methylstyrene and styrene is more preferred. As the aromatic vinyl-based resin, for example, those commercially available from Clayton, Eastman Chemical, etc. can be used.

The C5C9 resin refers to a resin obtained by copolymerizing the C5 fraction and the C9 fraction, and may be hydrogenated or modified. Examples of the C5 fraction and the C9 fraction include the above-mentioned petroleum fraction. As the C5C9 resin, for example, those commercially available from Tosoh Corporation, LUHUA, etc. can be used.

The acrylic resin is not particularly limited, but for example, a solvent-free acrylic resin can be used.

As the solvent-free acrylic resin, a (meth) acrylic resin (polymer) synthesized by a high-temperature continuous polymerization method (high-temperature continuous lump polymerization method (a method described in US 4414370 B, JP 84-6207 A, JP 93-58805 B, JP 89-313522 A, US 5010166 B, Toa Synthetic Research Annual Report TREND2000 No. 3 p42-45, and the like) without using polymerization initiators, chain transfer agents, organic solvents, etc. as auxiliary raw materials as much as possible, can be mentioned. In the present disclosure, (meth) acrylic means methacrylic and acrylic.

Examples of the monomer component constituting the acrylic resin include (meth) acrylic acid, and (meth) acrylic acid derivatives such as (meth) acrylic acid ester (alkyl ester, aryl ester, aralkyl ester, etc.), (meth) acrylamide, and (meth) acrylamide derivative.

In addition, as the monomer component constituting the acrylic resin, aromatic vinyl compounds such as styrene, $\alpha$-methylstyrene, vinyltoluene, vinylnaphthalene, divinylbenzene, trivinylbenzene, divinylnaphthalene, and the like may be used, together with (meth) acrylic acid or (meth) acrylic acid derivative.

The acrylic resin may be a resin composed of only a (meth) acrylic component or a resin also having a component other than the (meth) acrylic component. Further, the acrylic resin may have a hydroxyl group, a carboxyl group, a silanol group, or the like.

As the resin component, for example, a product of Maruzen Petrochemical Co., Ltd., Sumitomo Bakelite Co., Ltd., Yasuhara Chemical Co., Ltd., Toso Co., Ltd., Rutgers Chemicals Co., Ltd., BASF Co., Ltd., Arizona Chemical Co., Ltd., Nitto Chemical Co., Ltd., Co., Ltd., Nippon Catalyst Co., Ltd., JX Energy Co., Ltd., Arakawa Chemical Industry Co., Ltd., Taoka Chemical Industry Co., Ltd. can be used.

(c)Softener

The rubber composition may contain oil (including extender oil), liquid rubber, or the like as a softener. The total content of the softener is preferably more than 1 part by mass, more preferably 2 parts by mass or more, and less than 10 parts by mass with respect to 100 parts by mass of the rubber component. The content of oil also includes the amount of oil contained in the rubber (oil-extended rubber).

Examples of the oil include mineral oils (commonly referred to as process oils), vegetable oils, or mixtures thereof. As the mineral oil (process oil), for example, a paraffinic process oil, an aroma-based process oil, a naphthene process oil, or the like can be used. Examples of the vegetable oils and fats include castor oil, cottonseed oil, linseed oil, rapeseed oil, soybean oil, palm oil, coconut oil, peanut oil, rosin, pine oil, pine tar, tall oil, corn oil, rice oil, beni-flower oil, sesame oil, olive oil, sunflower oil, palm kernel oil, camellia oil, jojoba oil, macadamia nut oil, and tung oil. These may be used alone or in combination of two or more.

Specific examples of process oil (mineral oil) include products of Idemitsu Kosan Co., Ltd., Sankyo Yuka Kogyo Co., Ltd., Japan Energy Co., Ltd., Olisoy Co., Ltd., H&R Co., Ltd., Toyokuni Seiyu Co., Ltd., Showa Shell Sekiyu Co., Ltd., and Fuji Kosan Co., Ltd.

The liquid rubber mentioned as the softener is a polymer in a liquid state at room temperature (25°C) and is a polymer having a monomer similar to that of solid rubber as a constituent element. Examples of the liquid rubber include farnesene-based polymers, liquid diene-based polymers, and hydrogenated additives thereof.

The farnesene-based polymer is a polymer obtained by polymerizing farnesene, and has a structural unit based on farnesene. Farnesene includes isomers such as α-farnesene ((3E, 7E) -3,7,11-trimethyl-1,3,6,10-dodecatetraene) and β-farnesene (7,11-dimethyl-3-methylene-1, 6,10-dodecatorien).

The farnesene-based polymer may be a homopolymer of farnesene (farnesene homopolymer) or a copolymer of farnesene and a vinyl monomer (farnesene-vinyl monomer copolymer).

Examples of the liquid diene polymer include a liquid styrene-butadiene copolymer (liquid SBR), a liquid butadiene polymer (liquid BR), a liquid isoprene polymer (liquid IR), and a liquid styrene isoprene copolymer (liquid SIR).

The liquid diene polymer has a polystyrene-converted weight average molecular weight (Mw) measured by gel permeation chromatography (GPC) of, for example, more than $1.0 \times 10^3$ and less than $2.0 \times 10^5$. In the present specification, Mw of the liquid diene polymer is a polystyrene conversion value measured by gel permeation chromatography (GPC).

The content of the liquid rubber (the total content of the liquid farnesene-based polymer, the liquid diene-based polymer, etc.) is, for example, more than 1 part by mass and less than 100 parts by mass with respect to 100 parts by mass of the rubber component.

As the liquid rubber, for example, products of Kuraray Co., Ltd. and Clay Valley Co., Ltd. can be used.

(d) Anti-aging agent

The rubber composition preferably contains an anti-aging agent. Content of the anti-aging agent is, for example, more than 1 part by mass, 2.5 parts by mass or more, and less than 10 parts by mass with respect to 100 mass parts of rubber components.

Examples of the antiaging agent include naphthylamine-based antiaging agents such as phenyl-α-naphthylamine; diphenylamine-based antiaging agents such as octylated diphenylamine and 4,4'-bis (α, α'-dimethylbenzyl) diphenylamine; p-phenylenediamine-based anti-aging agent such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based anti-aging agent such as a polymer of 2,2,4-trimethyl-1,2-dihydroquinolin; monophenolic anti-aging agents such as 2,6-di-t-butyl-4-methylphenol, styrenated phenol; bis, tris, polyphenolic anti-aging agents such as tetrakis-[methylene-3-(3',5'-di-t-butyl-4'-hydroxyphenyl)propionate] methane. These may be used alone or in combination of two or more.

As the anti-aging agent, for example, products of Seiko Chemical Co., Ltd., Sumitomo Chemical Co., Ltd., Ouchi Shinko Chemical Industry Co., Ltd., Flexsys Co., Ltd., etc. can be used.

(e) Stearic acid

The rubber composition may contain stearic acid. Content of stearic acid is, for example, more than 0.5 parts by mass, 1.5 parts by mass or more and less than 10.0 parts by mass with respect to 100 parts by mass of the rubber component. As the stearic acid, conventionally known ones can be used, and, for example, products of NOF Corporation, NOF Corporation, Kao Corporation, Fuji film Wako Pure Chemical Industries, Ltd., and Chiba Fatty Acid Co., Ltd., etc. can be used.

(f) Zinc oxide

The rubber composition may contain zinc oxide. Content of zinc oxide is, for example, more than 0.5 parts by mass, 6 parts by mass or more and less than 10 parts by mass with respect to 100 parts by mass of the rubber component. As the zinc oxide, conventionally known ones can be used, for example, products of Mitsui Metal Mining Co., Ltd., Toho Zinc Co., Ltd., Hakusui Tech Co., Ltd., Shodo Chemical Industry Co., Ltd., Sakai Chemical Industry Co., Ltd., etc. can be used.

(g) Crosslinking agent and vulcanization accelerator

The rubber composition preferably contains a cross-linking agent such as sulfur. Content of the cross-linking agent is, for example, more than 0.1 part by mass, 2.8 part by mass or more and less than 10.0 parts by mass with respect to 100 parts by mass of the rubber component.

As the sulfur, powdered sulfur, precipitated sulfur, colloidal sulfur, insoluble sulfur, highly dispersible sulfur, and soluble sulfur, which are commonly used in the rubber industry can be used. These may be used alone or in combination of two or more.

As the sulfur, for example, products of Tsurumi Chemical Industry Co., Ltd., Karuizawa Sulfur Co., Ltd., Shikoku Chemicals Corporation, Flexsys Co., Ltd., Nippon Kanryu Kogyo Co., Ltd., Hosoi Chemical Industry Co., Ltd., etc. can be used.

Examples of the cross-linking agent other than sulfur include vulcanizing agents containing a sulfur atom such as Tackirol V200 manufactured by Taoka Chemical Industry Co., Ltd., DURALINK HTS (1,6-hexametdihylene-sodium dithiosulfate dihydrate) manufactured by Flexsys, and KA9188 (1,6-bis (N, N'-dibenzylthiocarbamoyldithio) hexane) manufactured by Lanxess; and organic peroxides such as dicumylperoxide.

The rubber composition preferably contains a vulcanization accelerator. Content of the vulcanization accelerator is, for example, more than 0.3 parts by mass, 2.8 parts by mass or more, 3.2 parts by mass or more, 3.5 parts by mass or more, and less than 10.0 parts by mass with respect to 100 parts by mass of the rubber component.

Examples of the vulcanization accelerator include

thiazole-based vulcanization accelerators such as 2-mercaptobenzothiazole, di-2-benzothiazolyl disulfide, and N-cyclohexyl-2-benzothiadylsulfenamide;
thiuram-based vulcanization accelerators such as tetramethylthiuram disulfide (TMTD), tetrabenzyltiuram disulfide (TBzTD), and tetrakis (2-ethylhexyl) thiuram disulfide (TOT-N);
sulfenamide-based vulcanization accelerators such as N-cyclohexyl-2-benzothiazolesulfenamide, N-t-butyl- 2-benzothiazolyl sulfenamide, N-oxyethylene-2-benzothiazolesulfenamide, N-oxyethylene-2-benzothiazolesulfenamide, and N, N'-diisopropyl-2-benzothiazolesulfenamide; and guanidine-based vulcanization accelerators such as diphenylguanidine, di-ortho-tolylguanidine and ortho-tolylbiguanidine. These may be used alone or in combination of two or more.

(h) Other

In addition to the above components, the rubber composition may further contain additives generally used in the tire industry, such as fatty acid metal salts, carboxylic acid metal salts, and organic peroxides. Content of these additives is, for example, more than 0.1 part by mass and less than 200 parts by mass with respect to 100 parts by mass of the rubber component.

(2) Production of rubber composition for bead reinforcing layer

The rubber composition is produced by a general method, for example, a manufacturing method including a base kneading step of kneading a rubber component with a filler such as carbon black, and a finish kneading step of kneading the kneaded product obtained in the base kneading step and a cross-linking agent.

The kneading can be performed using a known (sealed) kneader such as a banbury mixer, a kneader, or an open roll.

The kneading temperature in the base kneading step is, for example, higher than 50 °C and lower than 200 °C, and the kneading time is, for example, more than 30 seconds and less than 30 minutes. In the base kneading process, in addition to the above components, compounding agents conventionally used in the rubber industry, such as softeners such as oil, stearic acid, zinc oxide, antiaging agents, waxes, and vulcanization accelerators, may be appropriately added and kneaded as needed.

In the finish kneading step, the kneaded product obtained in the base kneading step and the cross-linking agent are kneaded. The kneading temperature in the finish kneading step is, for example, above room temperature and lower than 80 °C, and the kneading time is, for example, more than 1 minute and less than 15 minutes. In the finish kneading step, in addition to the above components, a vulcanization accelerator, zinc oxide and the like may be appropriately added and kneaded as needed.

3. Tire manufacturing

The tire of the present disclosure is manufactured by a usual method using an unvulcanized rubber composition obtained through the finish kneading step. That is, the bead reinforcing layer obtained by extruding an unvulcanized rubber composition into a predetermined shape is molded together with other tire members by a conventional method on a tire molding machine to produce an unvulcanized tire.

Specifically, on the molded drum, the inner liner as a member to ensure the air-tightness of the tire, the carcass as a member to withstand the load, impact and filling air pressure received by the tire, the belt as a member to strongly tighten the carcass to increase the rigidity of the tread, and the like are wound, both ends of the carcass are fixed to both side edges, a bead part as a member for fixing the tire to the rim is arranged, and they are formed into a toroid shape. Then the tread is pasted on the center of the outer circumference, and a bead reinforcing layer, a clinch portion and a side portion as a member protecting the carcass and resisting bending, is pasted on the radially outside, and an unvulcanized tire is produced.

In the present embodiment, it is preferable to provide with an inclined belt layer that extends at an angle of 15° to

30° with respect to the tire circumferential direction, as the belt. As a result, the durability of the tire is ensured while the rigidity of the tread can be sufficiently maintained. Further, since it can be restrained in the circumferential direction, it becomes easy to suppress the growth of the outer diameter.

Then, the produced unvulcanized tire is heated and pressed in a vulcanizer to obtain a tire. The vulcanization step can be carried out by applying a known vulcanization means. The vulcanization temperature is, for example, higher than 120 °C and lower than 200 °C, and the vulcanization time is, for example, more than 5 minutes and less than 15 minutes.

FIG. 1 and FIG. 2 show examples of the structure in the vicinity of the bead portion of the obtained tire. In FIGs. 1 and 2, 1 is a bead reinforcing layer, 3 is a sidewall, 4 is a clinch portion, 5 is a carcass, and 6 is an inner liner, 21 is a bead apex, and 22 is a bead core, and a bead is formed by these. In FIG. 1, the bead reinforcing layer 1 is covered with the clinch portion 4, and in FIG. 2, the bead reinforcing layer 1 extends to a height higher than the clinch portion 4

At this time, the tire is formed into a shape that satisfies the above-mentioned (formula 1) and (formula 2) when the tire is installed on a standardized rim and the internal pressure is set to 250 kPa.

Specific tires that can satisfy the above (formula 1) and (formula 2) include tires with size notation of 145/60R18, 145/60R19, 155/55R18, 155/55R19, 155/70R17, 155/70R19, 165/55R20, 165/55R21, 165/60R19, 165/65R19, 165/70R18, 175/55R19, 175/55R20, 175/55R22, 175/60R18, 185/55R19, 185/60R20, 195/50R20, 195/55R20, etc.

In the present embodiment, the tires that can satisfy (formula 1) and (formula 2) are preferably applied to pneumatic tires for passenger cars, and satisfying the above formulas can contribute more favorably to solve the problem in the present disclosure of providing a pneumatic tire with sufficiently reduced rolling resistance during high-speed running and excellent durability.

[EXAMPLES]

Hereinafter, the present invention will be described in more specific with reference to Examples.

[Experiment 1]

In this experiment, 175 size tires were prepared and evaluated.

1. Manufacture of rubber compositions for bead reinforcing layer

First, a rubber composition for bead reinforcing layer was produced.

(1) Compounding material

First, each compounding material shown below was prepared.

(a) Rubber component

(a-1) NR: TSR20
(a-2) SBR: Nipol1502 manufactured by Nippon Zeon Co., Ltd.

(b) Compounding materials other than rubber components

(b-1) Carbon black: Show Black N330 manufactured by Cabot Japan Co., Ltd.
(b-2) Resin component-1: Sumilite Resin PR12686 manufactured by Sumitomo Bakelite Co., Ltd. (Cashew oil-modified phenolic resin)
(b-3) Resin component-2: Sumikanol 620 manufactured by Taoka Chemical Co., Ltd. (Modified resorcinol/formaldehyde resin)
(b-4) Oil: Process X-140 manufactured by Japan Energy Co., Ltd.
(b-5) Antiaging agent-1: Nocrac 6C manufactured by Ouchi Shinko Chemical Industry Co., Ltd. (N-phenyl-N'-(1,3-dimethylbutyl)-p-phenylenediamine)
(b-6) Antiaging agent -2: Nocrac RD manufactured by Ouchi Shinko Chemical Industry Co., Ltd. (Poly(2,2,4-trimethyl-1,2-dihydroquinoline))
(b-7) Stearic acid: stearic acid "Tsubaki" manufactured by NOF Corporation
(b-8) Zinc oxide: zinc oxide No. 1 manufactured by Mitsui Kinzoku Mining Co., Ltd.
(b-9) Cross-linking agent and vulcanization accelerator

Sulfur: powdered sulfur manufactured by Tsurumi Chemical Industry Co., Ltd.

Vulcanization accelerator-1: Suncellar NS-G manufactured by Sanshin Chemical Industry Co., Ltd. (N-tert-butyl-2-benzothiazolylsulfenamide)
Vulcanization accelerator-2: Suncellar H-T (HMT) manufactured by Sanshin Chemical Industry Co., Ltd. (hexamethylenetetramine)

(2) Manufacture of rubber composition for bead reinforcing layer

In accordance with the each formulation shown in Table 1 and Table 2, materials other than sulfur and the vulcanization accelerator were kneaded under the conditions of 150 °C for 5 minutes using a banbury mixer to obtain a kneaded product. Each compounding amount is a mass part.

2. Manufacture of tires

Next, sulfur and a vulcanization accelerator were added to the obtained kneaded product, and the mixture was kneaded at 80°C for 5 minutes using an open roll to obtain a rubber composition for a bead reinforcing layer. A bead reinforcing layer is formed using the obtained tread rubber composition, bonded together with other tire members to form an unvulcanized tire, which is then vulcanized for 10 minutes under the condition of 170°C to produce each test tire having the size of 175 type (Examples 1-1 to 1-5 and Comparative Examples 1-3 to 1-5). At the same time, test tires of Comparative Examples 1-1 and 1-2 were produced as tires having no bead reinforcing layer.

Among the tire members, the sidewall is composed of 50 parts by mass of NR (TSR20), 50 parts by mass of BR (UBEPOL BR150B manufactured by Ube Industries, Ltd.), 30 parts by mass of carbon black (Show Black N550 manufactured by Cabot Japan Co., Ltd.), 15 parts by mass of oil (Process X-140 manufactured by Japan Energy Co., Ltd.), 1.5 parts by mass of stearic acid (stearic acid "Tsubaki" manufactured by NOF Corporation), 2.5 parts by mass of zinc oxide (Zinc white No. 1 manufactured by Mitsui Mining & Smelting Co., Ltd), 2.0 parts by mass of wax (Sannok wax manufactured by Ouchi Shinko Chemical Industry Co., Ltd.), 2.0 parts by mass of anti-aging agent -1 (Nocrac 6C manufactured by Ouchi Shinko Chemical Industry Co., Ltd.), 2.0 parts by mass of antioxidant-2 (Antage RD manufactured by Kawaguchi Chemical Industry Co., Ltd.), 1.5 parts by mass of sulfur (powdered sulfur manufactured by Tsurumi Chemical Industry Co., Ltd.), and 1.5 parts by mass of a vulcanization accelerator (Nocceler NS manufactured by Ouchi Shinko Chemical Industry Co., Ltd.), as compounding materials, and they were kneaded to form a rubber composition, which was then molded into a predetermined shape.

And, among the tire members, the clinch part is composed of 50 parts by mass of NR (TSR20), 50 parts by mass of BR (UBEPOL BR150B manufactured by Ube Industries, Ltd.), 60 parts by mass of carbon black (Showblack N550 manufactured by Cabot Japan Co., Ltd.), 5 parts by mass of oil (process X-140 manufactured by Japan Energy Co., Ltd.), 1.5 parts by mass of stearic acid (stearic acid "Tsubaki" manufactured by NOF Corporation), 3.5 parts by mass of zinc oxide (Zinc white No. 1 manufactured by Mitsui Mining & Smelting Co., Ltd), 2.0 parts by mass of wax (Sannok wax manufactured by Ouchi Shinko Chemical Industry Co., Ltd.), 2.0 parts by mass of anti-aging agent -1 (Nocrac 6C manufactured by Ouchi Shinko Chemical Industry Co., Ltd.), 2.0 parts by mass of antioxidant-2 (Antage RD manufactured by Kawaguchi Chemical Industry Co., Ltd.), 2.3 parts by mass of sulfur (powdered sulfur manufactured by Tsurumi Chemical Industry Co., Ltd.) and 3.0 parts by mass of a vulcanization accelerator (Nocceler NS manufactured by Ouchi Shinko Chemical Industry Co., Ltd.), as compounding materials, and they were kneaded to form a rubber composition, which was then molded into a predetermined shape.

3. Calculation of parameters

After that, for each test tire, the outer diameter Dt (mm), the cross-sectional width Wt (mm), the cross-sectional height Ht (mm), and the aspect ratio (%) were obtained, and the virtual volume V ($mm^3$) is calculated.

In addition, a rubber test piece for viscoelasticity measurement was cut out from the bead reinforcing layer of each test tire of Examples 1-1 to 1-5 and Comparative Examples 1-3 to 1-5, and, for each rubber test piece, tan $\delta$ and E* were measured using Eplexor series by GABO under the conditions of the temperature of 70°C, the frequency of 10 Hz, the initial strain of 5% and the dynamic strain rate of 1%. When the bead reinforcing layer of the test tire had the same composition, the average of each measured value was taken.

At this time, rubber test pieces for viscoelasticity measurement were also cut out from the sidewall and the clinch portion, and tan $\delta$ and E * were measured under the same measurement conditions. The measurement results were 0.06 for tan $\delta$ and 3.1 MPa for E* at the sidewall and 0.08 for tan $\delta$ and 10.5 MPa for E* at the clinch portion.

Then, (Dt-2$\times$Ht), ($Dt^2 \times \pi/4$)/Wt, (V+1.5$\times 10^7$)/Wt, (V+2.0$\times 10^7$)/Wt, (V+2.5$\times 10^7$)/Wt, (tan $\delta$/E*), and (tan $\delta$/E*) $\times$ (V/Wt) were obtained. Results are shown in Tables 1 and 2.

4. Performance evaluation test

(1) Evaluation of rolling resistance at high-speed running

Each test tire was installed on all wheels of the vehicle (domestic FF vehicle, displacement 2000cc), filled with air so that the internal pressure became 250kPa, and then driven on a dry road surface test course at a speed of 100km/h. After making a 10km lap, the accelerator was released, and the distance from when the accelerator was turned off until the vehicle stopped was measured as the rolling resistance at high-speed running.

Next, the result in Comparative example 1-5 was set to as 100, and the results were indexed based on the following formula to relatively evaluate the rolling resistance at high-speed running. The larger the value, the longer the distance from when the accelerator is turned off until the vehicle stops and the smaller the rolling resistance in the steady state, and showing excellent fuel efficiency.

$$\text{Rolling resistance} = [(\text{Result of test tire}) / (\text{Result of Comparative example 1-7})] \times 100$$

(2) Evaluation of durability performance

After installing each test tire on all wheels of the vehicle (domestic FF vehicle, displacement 2000cc) and filling it with air so that the internal pressure becomes 250kPa, a driving 10 laps at a speed of 50 km/h, followed by climbing onto the unevenness provided on the road surface at a speed of 80 km/h was repeated on the test course on a dry road surface in an overloaded state. Thereafter, the lap was performed again at a speed of 50 km/h and then the speed was gradually increased to measure the speed at the time when the driver felt an abnormality.

Next, the result in Comparative example 1-5 was set to as 100, and the durability performance was relatively evaluated by indexing based on the following formula. The larger the value, the better the durability.

$$\text{Durability} = [(\text{Result of test tire}) / (\text{Result of Comparative example 1-5})] \times 100$$

(3) Comprehensive evaluation

The evaluation results of (1) and (2) above were totaled to obtain a comprehensive evaluation.

(4) Evaluation result

The results of each evaluation are shown in Tables 1 and 2.

[Table 1]

| | Example No. | | | | |
|---|---|---|---|---|---|
| | 1-1 | 1-2 | 1-3 | 1-4 | 1-5 |
| SIZE | 175/40R21 | 175/40R21 | 175140R21 | 175/50R20 | 175/60R19 |
| (Formulation) | | | | | |
| NR | 70 | 70 | 70 | 70 | 70 |
| SBR | 30 | 30 | 30 | 30 | 30 |
| Carbon black | 70 | 70 | 55 | 70 | 70 |
| Resin component-1 | 8 | 12 | | 8 | 8 |
| Resin component-2 | | | 17 | | |
| Oil | 2 | 2 | 2 | 2 | 2 |
| Anti-aging agent-1 | 1.5 | 1.5 | 1.5 | 1.5 | 1.5 |
| Anti-aging agent-2 | 1 | 1 | 1 | 1 | 1 |
| Stearic acid | 1.5 | 1.5 | 1.5 | 1.5 | 1.5 |

(continued)

| (Formulation) | | | | | |
|---|---|---|---|---|---|
| Zinc oxide | 6 | 6 | 6 | 6 | 6 |
| Sulfur | 2.8 | 2.8 | 2.8 | 2.8 | 2.8 |
| Vulcanization accelerator-1 | 2 | 2 | 2 | 2 | 2 |
| Vulcanization accelerator-2 | 0.8 | 1.2 | 1.5 | 0.8 | 0.8 |
| (Parameter) | | | | | |
| Tan δ | 0.17 | 0.14 | 0.12 | 0.17 | 0.17 |
| E*(MPa) | 32 | 60 | 85 | 32 | 32 |
| Dt(mm) | 674 | 673 | 672 | 684 | 692 |
| V($mm^3$) | 23377471 | 23206160 | 23136067 | 29823416 | 34466507 |
| Wt(mm) | 176 | 175 | 177 | 181 | 178 |
| Ht(mm) | 70 | 70 | 69 | 88 | 105 |
| Dt-2×Ht(mm) | 534 | 533 | 534 | 508 | 482 |
| ($Dt^2$×n/4)/Wt | 2027 | 2033 | 2004 | 2030 | 2113 |
| (V+1.5×$10^7$)/Wt | 218054 | 218321 | 215458 | 247643 | 277902 |
| (V+2.0×$10^7$)/Wt | 246463 | 246892 | 243707 | 275267 | 305992 |
| (V+2.5×$10^7$)/Wt | 274872 | 275464 | 271955 | 302892 | 334082 |
| Aspect ratio (%) | 40 | 40 | 39 | 49 | 59 |
| (tanδ/E*) | 0.0053 | 0.0023 | 0.0014 | 0.0053 | 0.0053 |
| (tanδ/E*) × (V/Wt) | 705.64 | 309.42 | 184.53 | 875.34 | 1028.67 |
| (Evaluation result) | | | | | |
| Rolling resistance at high-speed running | 106 | 110 | 118 | 108 | 110 |
| Durability performance | 118 | 124 | 128 | 114 | 108 |
| Comprehensive evaluation | 224 | 234 | 246 | 222 | 218 |

[Table 2]

| | Comparative example No. | | | | |
|---|---|---|---|---|---|
| | 1-1 | 1-2 | 1-3 | 1-4 | 1-5 |
| SIZE | 175/80R14 | 175/60R19 | 175/80R14 | 175/80R14 | 175/80R14 |
| (Formulation) | | | | | |
| NR | | | 70 | 70 | 70 |
| SBR | | | 30 | 30 | 30 |
| Carbon black | | | 70 | 70 | 55 |
| Resin component-1 | | | 8 | 12 | |
| Resin component-2 | | | | | 17 |
| Oil | | | 2 | 2 | 2 |
| Anti-aging agent-1 | | | 1.5 | 1.5 | 1.5 |
| Anti-aging agent-2 | | | 1 | 1 | 1 |
| Stearic acid | | | 1.5 | 1.5 | 1.5 |
| Zinc oxide | | | 6 | 6 | 6 |

(continued)

| (Formulation) | | | | | |
|---|---|---|---|---|---|
| Sulfur | | | 2.8 | 2.8 | 2.8 |
| Vulcanization accelerator-1 | | | 2 | 2 | 2 |
| Vulcanization accelerator-2 | | | 0.8 | 1.2 | 1.5 |
| (Parameter) | | | | | |
| Tan δ | - | - | 0.17 | 0.14 | 0.12 |
| E*(MPa) | - | - | 32 | 60 | 85 |
| Dt(mm) | 636 | 693 | 635 | 637 | 636 |
| V($mm^3$) | 38612938 | 34331262 | 38317377 | 38669035 | 38612938 |
| Wt(mm) | 177 | 177 | 176 | 176 | 177 |
| Ht(mm) | 140 | 105 | 140 | 141 | 140 |
| Dt-2×Ht(mm) | 356 | 483 | 355 | 355 | 356 |
| ($Dt^2$×n/4)/Wt | 1795 | 2131 | 1799 | 1811 | 1795 |
| (V+1.5×$10^7$)/Wt | 302898 | 278708 | 302940 | 304938 | 302898 |
| (V+2.0×$10^7$)/Wt | 331147 | 306956 | 331349 | 333347 | 331147 |
| (V+2.5×$10^7$)/Wt | 359395 | 335205 | 359758 | 361756 | 359395 |
| Aspect ratio (%) | 79 | 59 | 80 | 80 | 79 |
| (tanδ/E*) | - | - | 0.0053 | 0.0023 | 0.0014 |
| (tanδ/E*) × (V/Wt) | - | - | 1156.60 | 512.66 | 307.98 |
| (Evaluation result) | | | | | |
| Rolling resistance at high-speed running | 96 | 100 | 92 | 94 | 100 |
| Durability performance | 86 | 90 | 92 | 96 | 100 |
| Comprehensive evaluation | 182 | 190 | 184 | 190 | 200 |

[Experiment 2]

In this experiment, 195 size tires were prepared and evaluated.

After producing the test tires of Examples 2-1 to 2-5 and Comparative examples 2-1 to 2-5 shown in Tables 3 and 4 in the same manner as in Experiment 1, each parameter was calculated by performing the same procedure. Then, in the same manner, a performance evaluation test was conducted and evaluated. In this experiment, the result in Comparative example 2-5 was set as 100 for evaluation. The results of each evaluation are shown in Tables 3 and 4.

[Table 3]

| | Example No. (not according to the invention) | | | | |
|---|---|---|---|---|---|
| | 2-1 | 2-2 | 2-3 | 2-4 | 2-5 |
| SIZE | 195/40R20 | 195/40R20 | 195140R20 | 195/50R19 | 195/60R18 |
| (Formulation) | | | | | |
| NR | 70 | 70 | 70 | 70 | 70 |
| SBR | 30 | 30 | 30 | 30 | 30 |
| Carbon black | 70 | 70 | 55 | 70 | 70 |
| Resin component-1 | 8 | 12 | | 8 | 8 |
| Resin component-2 | | | 17 | | |

(continued)

| (Formulation) | | | | | |
|---|---|---|---|---|---|
| Oil | 2 | 2 | 2 | 2 | 2 |
| Anti-aging agent-1 | 1.5 | 1.5 | 1.5 | 1.5 | 1.5 |
| Anti-aging agent-2 | 1 | 1 | 1 | 1 | 1 |
| Stearic acid | 1.5 | 1.5 | 1.5 | 1.5 | 1.5 |
| Zinc oxide | 6 | 6 | 6 | 6 | 6 |
| Sulfur | 2.8 | 2.8 | 2.8 | 2.8 | 2.8 |
| Vulcanization accelerator-1 | 2 | 2 | 2 | 2 | 2 |
| Vulcanization accelerator-2 | 0.8 | 1.2 | 1.5 | 0.8 | 0.8 |
| (Parameter) | | | | | |
| Tan δ | 0.17 | 0.14 | 0.12 | 0.17 | 0.17 |
| E*(MPa) | 32 | 60 | 85 | 32 | 32 |
| Dt(mm) | 663 | 665 | 664 | 680 | 690 |
| V($mm^3$) | 28813525 | 29087378 | 28575587 | 36140254 | 42045141 |
| Wt(mm) | 201 | 200 | 199 | 200 | 201 |
| Ht(mm) | 78 | 79 | 78 | 99 | 116 |
| Dt-2×Ht(mm) | 507 | 507 | 508 | 482 | 458 |
| ($Dt^2$×n/4)/Wt | 1718 | 1737 | 1740 | 1816 | 1860 |
| (V+1.5×$10^7$)/Wt | 217978 | 220437 | 218973 | 255701 | 283807 |
| (V+2.0×$10^7$)/Wt | 242853 | 245437 | 244098 | 280701 | 308682 |
| (V+2.5×$10^7$)/Wt | 267729 | 270437 | 269224 | 305701 | 333558 |
| Aspect ratio (%) | 39 | 40 | 39 | 50 | 58 |
| (tanδ/E*) | 0.0053 | 0.0023 | 0.0014 | 0.0053 | 0.0053 |
| (tanδ/E*) × (V/Wt) | 761.55 | 339.35 | 202.72 | 959.98 | 1111.27 |
| (Evaluation result) | | | | | |
| Rolling resistance at high-speed running | 108 | 112 | 120 | 110 | 112 |
| Durability performance | 120 | 126 | 130 | 114 | 110 |
| Comprehensive evaluation | 228 | 238 | 250 | 224 | 222 |

[Table 4]

| | Comparative example No. | | | | |
|---|---|---|---|---|---|
| | 2-1 | 2-2 | 2-3 | 2-4 | 2-5 |
| SIZE | 195/65R17 | 195/40R20 | 195/65R17 | 195/65R17 | 195/65R17 |
| (Formulation) | | | | | |
| NR | | | 70 | 70 | 70 |
| SBR | | | 30 | 30 | 30 |
| Carbon black | | | 70 | 70 | 55 |
| Resin component-1 | | | 8 | 12 | |
| Resin component-2 | | | | | 17 |
| Oil | | | 2 | 2 | 2 |

(continued)

| (Formulation) | | | | | |
|---|---|---|---|---|---|
| Anti-aging agent-1 | | | 1.5 | 1.5 | 1.5 |
| Anti-aging agent-2 | | | 1 | 1 | 1 |
| Stearic acid | | | 1.5 | 1.5 | 1.5 |
| Zinc oxide | | | 6 | 6 | 6 |
| Sulfur | | | 2.8 | 2.8 | 2.8 |
| Vulcanization accelerator-1 | | | 2 | 2 | 2 |
| Vulcanization accelerator-2 | | | 0.8 | 1.2 | 1.5 |
| (Parameter) | | | | | |
| Tan δ | - | - | 0.17 | 0.14 | 0.12 |
| E*(MPa) | - | - | 32 | 60 | 85 |
| Dt(mm) | 685 | 665 | 686 | 687 | 687 |
| V($mm^3$) | 44971685 | 28941941 | 44606217 | 45407022 | 45182235 |
| Wt(mm) | 202 | 199 | 200 | 202 | 201 |
| Ht(mm) | 127 | 79 | 127 | 128 | 128 |
| Dt-2×Ht(mm) | 431 | 507 | 432 | 431 | 431 |
| ($Dt^2$×n/4)/Wt | 1824 | 1745 | 1848 | 1835 | 1844 |
| (V+1.5×$10^7$)/Wt | 296890 | 220814 | 298031 | 299045 | 299414 |
| (V+2.0x$10^7$)/Wt | 321642 | 245939 | 323031 | 323797 | 324290 |
| (V+2.5×$10^7$)/Wt | 346394 | 271065 | 348031 | 348550 | 349165 |
| Aspect ratio (%) | 63 | 40 | 64 | 63 | 64 |
| (tanδ/E*) | - | - | 0.0053 | 0.0023 | 0.0014 |
| (tanδ/E*) × (V/Wt) | - | - | 1184.85 | 524.50 | 317.35 |
| (Evaluation result) | | | | | |
| Rolling resistance at high-speed running | 94 | 100 | 92 | 94 | 100 |
| Durability performance | 84 | 86 | 90 | 94 | 100 |
| Comprehensive evaluation | 178 | 186 | 182 | 188 | 200 |

[Experiment 3]

In this experiment, 225 size tires were prepared and evaluated.

After producing the test tires of Examples 3-1 to 3-5 and Comparative examples 3-1 to 3-5 shown in Tables 5 and 6 in the same manner as in Experiment 1, each parameter was calculated by performing the same procedure. Then, in the same manner, a performance evaluation test was conducted and evaluated. In this experiment, the result in Comparative example 3-5 was set as 100 for evaluation. The results of each evaluation are shown in Tables 5 and 6.

[Table 5]

| | Example No. (not according to the invention) | | | | |
|---|---|---|---|---|---|
| | 3-1 | 3-2 | 3-3 | 3-4 | 3-5 |
| SIZE | 225/35R22 | 225/35R22 | 225/35R22 | 225/50R20 | 225/40R21 |
| (Formulation) | | | | | |
| NR | 70 | 70 | 70 | 70 | 70 |

(continued)

| | | | | | |
|---|---|---|---|---|---|
| (Formulation) | | | | | |
| SBR | 30 | 30 | 30 | 30 | 30 |
| Carbon black | 70 | 70 | 55 | 70 | 70 |
| Resin component-1 | 8 | 12 | | 8 | 8 |
| Resin component-2 | | | 17 | | |
| Oil | 2 | 2 | 2 | 2 | 2 |
| Anti-aging agent-1 | 1.5 | 1.5 | 1.5 | 1.5 | 1.5 |
| Anti-aging agent-2 | 1 | 1 | 1 | 1 | 1 |
| Stearic acid | 1.5 | 1.5 | 1.5 | 1.5 | 1.5 |
| Zinc oxide | 6 | 6 | 6 | 6 | 6 |
| Sulfur | 2.8 | 2.8 | 2.8 | 2.8 | 2.8 |
| Vulcanization accelerator-1 | 2 | 2 | 2 | 2 | 2 |
| Vulcanization accelerator-2 | 0.8 | 1.2 | 1.5 | 0.8 | 0.8 |
| (Parameter) | | | | | |
| Tan $\delta$ | 0.17 | 0.14 | 0.12 | 0.17 | 0.17 |
| E*(MPa) | 32 | 60 | 85 | 32 | 32 |
| Dt(mm) | 718 | 716 | 717 | 733 | 714 |
| V($mm^3$) | 37040131 | 36203610 | 36260445 | 51283296 | 40755756 |
| Wt(mm) | 231 | 229 | 229 | 233 | 231 |
| Ht(mm) | 80 | 79 | 79 | 113 | 90 |
| Dt-2$\times$Ht(mm) | 558 | 558 | 559 | 507 | 534 |
| ($Dt^2 \times n/4$)/Wt | 1753 | 1758 | 1763 | 1811 | 1733 |
| (V+1.5$\times 10^7$)/Wt | 225282 | 223597 | 223845 | 284478 | 241367 |
| (V+2.0x$10^7$)/Wt | 246927 | 245431 | 245679 | 305937 | 263012 |
| (V+2.5$\times 10^7$)/Wt | 268572 | 267265 | 267513 | 327396 | 284657 |
| Aspect ratio (%) | 35 | 34 | 34 | 48 | 39 |
| (tan$\delta$/E*) | 0.0053 | 0.0023 | 0.0014 | 0.0053 | 0.0053 |
| (tan$\delta$/E*) $\times$ (V/Wt) | 851.84 | 368.89 | 223.54 | 1169.28 | 937.29 |
| (Evaluation result) | | | | | |
| Rolling resistance at high-speed running | 104 | 110 | 116 | 108 | 112 |
| Durability performance | 116 | 120 | 126 | 112 | 106 |
| Comprehensive evaluation | 220 | 230 | 242 | 220 | 218 |

[Table 6]

| | Comparative example No. | | | | |
|---|---|---|---|---|---|
| | 3-1 | 3-2 | 3-3 | 3-4 | 3-5 |
| SIZE | 225/60R20 | 225/50R20 | 225/60R20 | 225/60R20 | 225/60R20 |
| (Formulation) | | | | | |
| NR | | | 70 | 70 | 70 |
| SBR | | | 30 | 30 | 30 |

(continued)

| | | | | | |
|---|---|---|---|---|---|
| (Formulation) | | | | | |
| Carbon black | | | 70 | 70 | 55 |
| Resin component-1 | | | 8 | 12 | |
| Resin component-2 | | | | | 17 |
| Oil | | | 2 | 2 | 2 |
| Anti-aging agent-1 | | | 1.5 | 1.5 | 1.5 |
| Anti-aging agent-2 | | | 1 | 1 | 1 |
| Stearic acid | | | 1.5 | 1.5 | 1.5 |
| Zinc oxide | | | 6 | 6 | 6 |
| Sulfur | | | 2.8 | 2.8 | 2.8 |
| Vulcanization accelerator-1 | | | 2 | 2 | 2 |
| Vulcanization accelerator-2 | | | 0.8 | 1.2 | 1.5 |
| (Parameter) | | | | | |
| Tan $\delta$ | - | - | 0.17 | 0.14 | 0.12 |
| E*(MPa) | - | - | 32 | 60 | 85 |
| Dt(mm) | 777 | 734 | 778 | 779 | 778 |
| V($mm^3$) | 62352540 | 51586466 | 62176957 | 62362801 | 62449663 |
| Wt(mm) | 229 | 234 | 228 | 227 | 229 |
| Ht(mm) | 135 | 113 | 135 | 136 | 135 |
| Dt-2$\times$Ht(mm) | 507 | 508 | 508 | 507 | 508 |
| ($Dt^2\times$n/4)/Wt | 2071 | 1808 | 2085 | 2100 | 2076 |
| (V+1.5$\times10^7$)/Wt | 337784 | 284558 | 338495 | 340805 | 338208 |
| (V+2.0x$10^7$)/Wt | 359618 | 305925 | 360425 | 362832 | 360042 |
| (V+2.5$\times10^7$)/Wt | 381452 | 327293 | 382355 | 384858 | 381876 |
| Aspect ratio (%) | 59 | 48 | 59 | 60 | 59 |
| (tan$\delta$/E*) | - | - | 0.0053 | 0.0023 | 0.0014 |
| (tan$\delta$/E*) $\times$ (V/Wt) | - | - | 1448.75 | 641.03 | 385.00 |
| (Evaluation result) | | | | | |
| Rolling resistance at high-speed running | 92 | 100 | 94 | 96 | 100 |
| Durability performance | 88 | 88 | 90 | 98 | 100 |
| Comprehensive evaluation | 180 | 188 | 184 | 194 | 200 |

[Summary of Experiments 1 to 3]

From the results of Experiments 1 to 3 (Tables 1 to 6), for tires of any size, 175 size, 195 size, 225 size, it turns out that it is possible to provide a pneumatic tire with reduced rolling resistance at high-speed running and excellent durability, when the tires have a bead reinforcing layer, and further the above (formula 1) and (formula 2) are satisfied.

Then, it turns out that, by satisfying each of the requirements specified in claim 2 and thereafter, it is possible to provide a tire with further reduced rolling resistance at high-speed running and excellent durability performance.

On the other hand, it turns out that when the tires do not have a bead reinforcing layer, or when any of (formula 1) or (formula 2) is not satisfied, the reduced rolling resistance at high-speed running and the excellent durability performance are not sufficiently achieved.

[Experiment 4]

Next, three types of tires (Examples 4-1 to 4-3), in which the relationship between the virtual volume V and the cross-sectional width Wt did not differ significantly, were produced with the same formulation and were evaluated according to the same manner. Here, in addition to the above-mentioned evaluation of rolling resistance during high-speed running and durability performance, the ride comfort was also evaluated.

Specifically, each test tire was installed on all wheels of the vehicle (domestic FF vehicle, displacement 2000cc), filled with air so that the internal pressure became 250kPa, and then driven on a dry road surface test course. The driver sensory-tested the ride comfort on a 5-point scale when the vehicle has driven 10 km at a speed of 100 km/h. After summing up the evaluations by 20 drivers, the evaluation was indexed based on the following formula, with the total score in Example 4-3 being set to 100, and the ride comfort was relatively evaluated. A larger value indicates better ride comfort.

$$\text{Ride comfort} = [(\text{Total evaluation score of test tire}) / (\text{Total evaluation score of Example 4-3})] \times 100$$

Then, as in Experiments 1 to 3, each evaluation result was totaled to obtain a comprehensive evaluation. Table 7 shows the results of each evaluation.

[Table 7]

| | Example No. (not according to the invention) | | |
|---|---|---|---|
| | 4-1 | 4-2 | 4-3 |
| SIZE | 175/55R18 | 195/50R19 | 225/45R20 |
| (Formulation) | | | |
| NR | 70 | 70 | 70 |
| SBR | 30 | 30 | 30 |
| Carbon black | 55 | 55 | 55 |
| Resin component-1 | | | |
| Resin component-2 | 17 | 17 | 17 |
| Oil | 2 | 2 | 2 |
| Anti-aging agent-1 | 1.5 | 1.5 | 1.5 |
| Anti-aging agent-2 | 1 | 1 | 1 |
| Stearic acid | 1.5 | 1.5 | 1.5 |
| Zinc oxide | 6 | 6 | 6 |
| Sulfur | 2.8 | 2.8 | 2.8 |
| Vulcanization accelerator-1 | 2 | 2 | 2 |
| Vulcanization accelerator-2 | 1.5 | 1.5 | 1.5 |
| (Parameter) | | | |
| Tan $\delta$ | 0.12 | 0.12 | 0.12 |
| E*(MPa) | 85 | 85 | 85 |
| Dt(mm) | 649 | 679 | 710 |
| V($mm^3$) | 30327983 | 36015050 | 43478150 |
| Wt(mm) | 182 | 201 | 225 |
| Ht(mm) | 96 | 98 | 101 |
| Dt-2$\times$Ht(mm) | 457 | 483 | 508 |
| ($Dt^2\times$n/4)/Wt | 1818 | 1801 | 1760 |

(continued)

| (Parameter) | | | |
|---|---|---|---|
| $(V+1.5\times10^7)/Wt$ | 249055 | 253806 | 259903 |
| $(V+2.0x10^7)/Wt$ | 276527 | 278682 | 282125 |
| $(V+2.5\times10^7)/Wt$ | 304000 | 303557 | 304347 |
| Aspect ratio (%) | 53 | 49 | 45 |
| $(\tan\delta/E^*)$ | 0.0014 | 0.0014 | 0.0014 |
| $(\tan\delta/E^*)\times(V/Wt)$ | 235.25 | 252.96 | 272.80 |
| (Evaluation result) | | | |
| Rolling resistance at high-speed running | 110 | 104 | 100 |
| Durability performance | 104 | 102 | 100 |
| Ride comfort | 110 | 106 | 100 |
| Comprehensive evaluation | 324 | 312 | 300 |

Table 7 shows that, when there is no large difference in the relationship between the virtual volume V and the cross-sectional width Wt, all the rolling resistance at high-speed running and the durability are improved, as the cross-sectional width Wt becomes smaller as from less than 205 mm to less than 200 mm, and as the aspect ratio increases.

Although the present invention has been described above based on the embodiments, the present invention is not limited to the above embodiments. The present invention relates to the subject matter of claim 1. Preferred embodiments are presented in dependent claims.

[Description of the reference signs]

1 Bead reinforcing layer
3 Sidewall
4 Clinch portion
5 Carcass
6 Inner liner
21 Bead Apex
22 Bead core

**Claims**

1. A pneumatic tire having a bead portion, a carcass and a tread, in which a bead reinforcing layer that reinforces the bead portion from the outside of the carcass is provided on the outside of the carcass in the tire axial direction, and the tire satisfies following (formula 1) and (formula 2):

$$1963.4 \leqq (Dt^2\times \pi/4)/Wt \leqq 2827.4 \cdots \text{(formula 1)}$$

$$[(V+1.5\times10^7)/Wt] \leqq 2.88\times10^5 \cdots \text{(formula 2)},$$

where the cross-sectional width of the tire is Wt (mm), the outer diameter is Dt (mm), and the volume of the space occupied by the tire is the virtual volume V ($mm^3$), when the tire is installed on a standardized rim and the internal pressure is 250 kPa, wherein the virtual volume V can be calculated by the following formula: $V = [(Dt/2)^2 - \{(Dt/2)-Ht\}^2] \times \pi \times Wt$ based on the outer diameter of tire Dt (mm), the tire cross-sectional height Ht (mm) and the cross-sectional width of tire Wt (mm), in the state the tire is installed on a standardized rim, the internal pressure is 250 kPa and no load is applied.

2. The pneumatic tire according to claim 1, wherein the following (formula 3) is satisfied.

$$[(V + 2.0 \times 10^7) / Wt] \leqq 2.88 \times 10^5 \cdots \text{(formula 3)}$$

**3.** The pneumatic tire according to claim 2, wherein the following (formula 4) is satisfied.

$$[(V + 2.5 \times 10^7) / Wt] \leqq 2.88 \times 10^5 \cdots \text{(formula 4)}$$

**4.** The pneumatic tire according to any one of claims 1 to 3, wherein, when the outer diameter of the tire is Dt (mm) and the cross-sectional height of the tire is Ht (mm) when the tire is installed on a standardized rim and the internal pressure is 250 kPa, (Dt-2 × Ht) is 470 (mm) or more.

**5.** The pneumatic tire according to any one of claims 1 to 4, which has an aspect ratio of 40% or more.

**6.** The pneumatic tire according to claim 5, which has an aspect ratio of 45% or more.

**7.** The pneumatic tire according to claim 6, which has an aspect ratio of 47.5% or more.

**8.** The pneumatic tire according to claim 7, which has an aspect ratio of 50% or more.

**9.** The pneumatic tire of any combination according to any one of claims 1 to 8, wherein the ratio (tan δ/E*) of the loss tangent (tan δ) to the complex elastic modulus (E*: MPa), of the bead reinforcing layer, measured under the conditions of the temperature of 70°C, the frequency of 10 Hz, the initial strain of 5%, and the dynamic strain rate of 1%, is 0.005 or less.

**10.** The pneumatic tire according to any one of claims 1 to 9, wherein, in a cross-sectional view of the tire in the radial direction, the height of the bead reinforcing layer from below the bead core is 45% or less of the height from below the bead core to the outermost surface of the tread.

**11.** The pneumatic tire according to any one of claims 1 to 10, wherein, the ratio (tan δ/E*) of the loss tangent (tan δ) to the complex elastic modulus (E*: MPa), measured under the conditions of the temperature of 70°C, the frequency of 10 Hz, the initial strain of 5%, and the dynamic strain rate of 1%, and the cross-sectional width Wt (mm) of the tire and the virtual volume V ($mm^3$) satisfy the following (formula 5).

$$(\tan \delta/E^*) \times (V/Wt) \leqq 400 \text{ (formula 5)}$$

**12.** The pneumatic tire according to claim 11, wherein the following (formula 6) is satified.

$$(\tan \delta/E^*) \times (V/Wt) \leqq 300 \text{ (formula 6)}$$

**13.** The pneumatic tire according to any one of claims 1 to 12, wherein the tire has a sidewall formed using a rubber composition having a loss tangent (tan δ) of 0.08 or less measured under conditions of the temperature of 70°C, the frequency of 10 Hz, the initial strain of 5%, and the dynamic strain rate of 1%.

**14.** The pneumatic tire according to claim 13, wherein the rubber composition forming the sidewall has complex elastic modulus (E*: MPa) of 4.0 MPa or less measured under conditions of the temperature of 70°C, the frequency of 10 Hz, the initial strain of 5%, and the dynamic strain rate of 1%.

**15.** The pneumatic tire according to any one of claims 1 to 14, wherein the tire has a clinch portion formed using a rubber composition having a loss tangent (tan δ) of 0.10 or less measured under conditions of the temperature of 70°C, the frequency of 10 Hz, the initial strain of 5%, and the dynamic strain rate of 1%.

**16.** The pneumatic tire according to claim 15, wherein the rubber composition forming the clinch portion has complex elastic modulus (E*: MPa) of 8.0 MPa or more measured under conditions of the temperature of 70 °C, the frequency of 10 Hz, the initial strain of 5%, and the dynamic strain rate of 1%.

**17.** The pneumatic tire according to any one of claims 1 to 16, wherein

the tread portion has a circumferential groove extending continuously in the tire circumferential direction, and the ratio of the groove width $L_{80}$ at a depth of 80% of the maximum depth of the circumferential groove to the groove width $L_0$ of the circumferential groove on the ground contact surface of the tread portion ($L_{80}$ / $L_0$) is 0.3 to 0.7.

**18.** The pneumatic tire according to any one of claims 1 to 17, wherein

the tread portion has a plurality of circumferential grooves extending continuously in the tire circumferential direction, and
the total cross-sectional area of the plurality of circumferential grooves is 10 to 30% of the cross-sectional area of the tread portion.

**19.** The pneumatic tire according to any one of claims 1 to 18, wherein

the tread portion has a plurality of lateral grooves extending in the axial direction of the tire, and
the total volume of the plurality of lateral grooves is 2.0 to 5.0% of the volume of the tread portion.

**20.** The pneumatic tire according to any one of claims 1 to 19, wherein Dt is less than 685 (mm), where Dt (mm) is the outer diameter of the tire when the tire is installed on a standardized rim and the internal pressure is 250 kPa.

**21.** The pneumatic tire according to any one of claims 1 to 20, wherein the cross-sectional width Wt(mm) is less than 205 mm.

**22.** The pneumatic tire according to claim 21, wherein the cross-sectional width Wt (mm) is less than 200 mm.

**23.** The pneumatic tire according to any one of claims 1 to 22, which is a pneumatic tire for a passenger car.

## Patentansprüche

**1.** Luftreifen mit einem Wulstabschnitt, einer Karkasse und einer Lauffläche, bei dem eine Wulstverstärkungsschicht, die den Wulstabschnitt von der Außenseite der Karkasse verstärkt, auf der Außenseite der Karkasse in der axialen Richtung des Reifens vorgesehen ist, und

der Reifen die folgende (Formel 1) und (Formel 2) erfüllt:

$$1963{,}4 \leqq (Dt^2 \times \pi/4) / Wt \leqq 2827{,}4 \cdot\cdot\cdot\cdot (\text{Formel } 1)$$

$$[(V + 1.5\times10^7) / Wt] \leqq 2.88 \times 10^5 \cdot\cdot\cdot (\text{Formel } 2),$$

wobei die Querschnittsbreite des Reifens Wt (mm) ist, der Außendurchmesser Dt (mm) ist und das Volumen des Raums, der von dem Reifen eingenommen wird, das virtuelle Volumen V ($mm^3$) ist, wenn der Reifen auf einer standardisierten Felge installiert ist und der Innendruck 250 kPa beträgt, wobei das virtuelle Volumen V durch die folgende Formel berechnet werden kann:

$$V = [(Dt/2)^2 - \{(Dt/2) - Ht\}^2 ] \times \pi \times Wt$$

basierend auf dem Außendurchmesser des Reifens Dt (mm), der Reifenquerschnittshöhe Ht (mm) und der Querschnittsbreite des Reifens Wt (mm) in dem Zustand, in dem der Reifen auf einer standardisierten Felge installiert ist, der Innendruck 250 kPa beträgt und keine Last aufgebracht wird.

**2.** Luftreifen nach Anspruch 1, wobei die folgende (Formel 3) erfüllt ist:

$$[(V + 2.0\times10^7) / Wt] \leqq 2.88 \times 10^5 \cdot\cdot\cdot (\text{Formel } 3)$$

**3.** Luftreifen nach Anspruch 2, wobei die folgende (Formel 4) erfüllt ist:

$$[(V + 2.5\times10^{7}) / Wt] \leqq 2.88 \times 10^{5} \cdot\cdot\cdot \text{(Formel 4)}$$

**4.** Luftreifen nach einem der Ansprüche 1 bis 3, wobei, wenn der Außendurchmesser des Reifens Dt (mm) ist und die Querschnittshöhe des Reifens Ht (mm) ist, wenn der Reifen auf einer standardisierten Felge installiert ist und der Innendruck 250 kPa beträgt, (Dt-2 × Ht) dann 470 (mm) oder mehr beträgt.

**5.** Luftreifen nach einem der Ansprüche 1 bis 4, der ein Seitenverhältnis von 40 % oder mehr aufweist.

**6.** Luftreifen nach Anspruch 5, der ein Seitenverhältnis von 45 % oder mehr aufweist.

**7.** Luftreifen nach Anspruch 6, der ein Seitenverhältnis von 47,5 % oder mehr aufweist.

**8.** Luftreifen nach Anspruch 7, der ein Seitenverhältnis von 50 % oder mehr aufweist.

**9.** Luftreifen nach einer Kombination nach einem der Ansprüche 1 bis 8, wobei das Verhältnis (tan δ/E*) des Verlustfaktors (tan δ) zu dem komplexen Elastizitätsmodul (E*: MPa) der Wulstverstärkungsschicht, gemessen unter den Bedingungen der Temperatur von 70°C, der Frequenz von 10 Hz, der Anfangsdehnung von 5 % und der dynamischen Dehnungsrate von 1 %, dann 0,005 oder weniger beträgt.

**10.** Luftreifen nach einem der Ansprüche 1 bis 9, wobei in einer Querschnittsansicht des Reifens in der radialen Richtung die Höhe der Wulstverstärkungsschicht von unterhalb des Wulstkerns 45 % oder weniger der Höhe von unterhalb des Wulstkerns zu der äußersten Oberfläche der Lauffläche beträgt.

**11.** Luftreifen nach einem der Ansprüche 1 bis 10, wobei das Verhältnis (tan δ/E*) des Verlustfaktors (tan δ) zu dem komplexen Elastizitätsmodul (E*: MPa), gemessen unter den Bedingungen der Temperatur von 70°C, der Frequenz von 10 Hz, der Anfangsdehnung von 5 % und der dynamischen Dehnungsrate von 1 %, und der Querschnittsbreite Wt (mm) des Reifens und des virtuellen Volumens V ($mm^3$) die folgende (Formel 5) erfüllen:

$$(\tan\delta/E^{*}) \times (V/Wt) \leqq 400 \text{ (Formel 5)}$$

**12.** Luftreifen nach Anspruch 11, wobei die folgende (Formel 6) erfüllt ist:

$$(\tan\delta/E^{*}) \times (V/Wt) \leqq 300 \text{ (Formel 6)}$$

**13.** Luftreifen nach einem der Ansprüche 1 bis 12, wobei der Reifen eine Seitenwand aufweist, die unter Verwendung einer Kautschukzusammensetzung mit einem Verlustfaktor (tan δ) von 0,08 oder weniger, gemessen unter den Bedingungen der Temperatur von 70°C, der Frequenz von 10 Hz, der Anfangsdehnung von 5 % und der dynamischen Dehnungsrate von 1 %, gebildet ist.

**14.** Luftreifen nach Anspruch 13, wobei die Kautschukzusammensetzung, die die Seitenwand bildet, einen komplexen Elastizitätsmodul (E*: MPa) von 4,0 MPa oder weniger, gemessen unter den Bedingungen der Temperatur von 70°C, der Frequenz von 10 Hz, der Anfangsdehnung von 5 % und der dynamischen Dehnungsrate von 1 %, aufweist.

**15.** Luftreifen nach einem der Ansprüche 1 bis 14, wobei der Reifen einen Clinchabschnitt aufweist, der unter Verwendung einer Kautschukzusammensetzung mit einem Verlustfaktor (tan δ) von 0,10 oder weniger, gemessen unter den Bedingungen der Temperatur von 70°C, der Frequenz von 10 Hz, der Anfangsdehnung von 5 % und der dynamischen Dehnungsrate von 1 %, gebildet ist.

**16.** Luftreifen nach Anspruch 15, wobei die Kautschukzusammensetzung, die den Clinchabschnitt bildet, einen komplexen Elastizitätsmodul (E*: MPa) von 8,0 MPa oder mehr, gemessen unter den Bedingungen der Temperatur von 70°C, der Frequenz von 10 Hz, der Anfangsdehnung von 5 % und der dynamischen Dehnungsrate von 1 %, aufweist.

**17.** Luftreifen nach einem der Ansprüche 1 bis 16, wobei

der Laufflächenabschnitt eine Umfangsrille aufweist, die sich kontinuierlich in der Umfangsrichtung des Reifens erstreckt, und

das Verhältnis der Rillenbreite $L_{80}$ bei einer Tiefe von 80 % der maximalen Tiefe der Umfangsrille zu der Rillenbreite $L_0$ der Umfangsrille auf der Bodenkontaktoberfläche des Laufflächenabschnitts ($L_{80}$ /$L_0$) 0,3 bis 0,7 beträgt.

**18.** Luftreifen nach einem der Ansprüche 1 bis 17, wobei

der Laufflächenabschnitt eine Vielzahl von Umfangsrillen aufweist, die sich kontinuierlich in der Umfangsrichtung des Reifens erstrecken, und
die Gesamtquerschnittsfläche der Vielzahl von Umfangsrillen 10 bis 30 % der Querschnittsfläche des Laufflächenabschnitts beträgt.

**19.** Luftreifen nach einem der Ansprüche 1 bis 18, wobei

der Laufflächenabschnitt eine Vielzahl von Querrillen aufweist, die sich in der axialen Richtung des Reifens erstrecken, und
das Gesamtvolumen der Vielzahl von Querrillen 2,0 bis 5,0 % des Volumens des Laufflächenabschnitts beträgt.

**20.** Luftreifen nach einem der Ansprüche 1 bis 19, wobei Dt weniger als 685 (mm) beträgt, wobei Dt (mm) der Außendurchmesser des Reifens ist, wenn der Reifen auf einer standardisierten Felge installiert ist und der Innendruck 250 kPa beträgt.

**21.** Luftreifen nach einem der Ansprüche 1 bis 20, wobei die Querschnittsbreite Wt (mm) weniger als 205 mm beträgt.

**22.** Luftreifen nach Anspruch 21, wobei die Querschnittsbreite Wt (mm) weniger als 200 mm beträgt.

**23.** Luftreifen nach einem der Ansprüche 1 bis 22, der ein Luftreifen für einen Personenkraftwagen ist.

**Revendications**

**1.** Bandage pneumatique ayant une partie de talon, une carcasse et une bande de roulement, dans lequel une couche de renforcement de talon qui renforce la partie de talon depuis l'extérieur de la carcasse est disposée sur l'extérieur de la carcasse dans la direction axiale de pneumatique, et le pneumatique satisfait à la (formule 1) et à la (formule 2) suivantes :

$$1963{,}4 \leq (Dt^2 \times \pi/4) / Wt \leq 2827{,}4 \qquad \text{(formule 1)}$$

$$[(V + 1{,}5 \text{ X } 10^7) / Wt] \leq 2{,}88 \text{ X } 10^5 \qquad \text{(formule 2),}$$

où la largeur de section transversale du pneumatique est Wt (mm), le diamètre extérieur est Dt (mm), et le volume de l'espace occupé par le pneumatique est le volume virtuel V ($mm^3$), lorsque le pneumatique est installé sur une jante normalisée et que la pression interne est de 250 kPa, dans lequel le volume virtuel V peut être calculé par la formule suivante : $V = [(Dt/2)^2 - \{(Dt/2) - Ht\}^2 ] \times \pi \times Wt$ sur la base du diamètre extérieur du pneumatique Dt (mm), de la hauteur de section transversale Ht (mm), et de la largeur de section transversale du pneumatique Wt (mm), dans l'état où le pneumatique est installé sur une jante normalisée, la pression interne est de 250 kPa et aucune charge n'est appliquée.

**2.** Bandage pneumatique selon la revendication 1, dans lequel la (formule 3) suivante est satisfaite :

$$[(V + 2{,}0 \times 10^7) / Wt] \leq 2{,}88 \times 10^5 \qquad \text{(formule 3).}$$

**3.** Bandage pneumatique selon la revendication 2, dans lequel la (formule 4) suivante est satisfaite :

$$[(V + 2{,}5 \times 10^7) / Wt] \leq 2{,}88 \times 10^5 \qquad \text{(formule 4).}$$

**4.** Bandage pneumatique selon l'une quelconque des revendications 1 à 3, dans lequel, lorsque le diamètre extérieur du pneumatique est Dt (mm) et que la hauteur de section transversale du pneumatique est Ht (mm) lorsque le pneumatique est installé sur une jante normalisée et que la pression interne est de 250 kPa, (Dt-2 $\times$ Ht) est égal à 470 (mm) ou plus.

**5.** Bandage pneumatique selon l'une quelconque des revendications 1 à 4, qui présente un rapport d'aspect de 40 % ou plus.

**6.** Bandage pneumatique selon la revendication 5, qui présente un rapport d'aspect de 45 % ou plus.

**7.** Bandage pneumatique selon la revendication 6, qui présente un rapport d'aspect de 47,5 % ou plus.

**8.** Bandage pneumatique selon la revendication 7, qui présente un rapport d'aspect de 50 % ou plus.

**9.** Bandage pneumatique d'une combinaison quelconque selon l'une quelconque des revendications 1 à 8, dans lequel le rapport (tan $\delta$/E*) de la tangente de l'angle de perte (tan $\delta$) sur le module d'élasticité complexe (E*:MPa), de la couche de renforcement de talon, mesuré dans les conditions de température de 70 °C, de fréquence de 10 Hz, de déformation initiale de 5 % et de taux de déformation dynamique de 1 %, est de 0,005 ou moins.

**10.** Bandage pneumatique selon l'une quelconque des revendications 1 à 9, dans lequel, dans une vue en coupe transversale du pneumatique dans la direction radiale, la hauteur de la couche de renforcement de talon à partir du dessous de la tringle est de 45 % ou moins de la hauteur à partir du dessous de la tringle jusqu'à la surface la plus à l'extérieur de la bande de roulement.

**11.** Bandage pneumatique selon l'une quelconque des revendications 1 à 10, dans lequel le rapport (tan $\delta$/E*) de la tangente de l'angle de perte (tan $\delta$) sur le module d'élasticité complexe (E*:MPa), mesuré dans les conditions de température de 70 °C, de fréquence de 10 Hz, de déformation initiale de 5 % et de taux de déformation dynamique de 1 %, et la largeur de section transversale Wt (mm) du pneumatique, et le volume virtuel V ($mm^3$) satisfont à la (formule 5) suivante :

$$(\tan \delta/E^*) \times (V/Wt) \leq 400 \qquad \text{(formule 5).}$$

**12.** Bandage pneumatique selon la revendication 11, dans lequel la (formule 6) suivante est satisfaite :

$$(\tan \delta/E^*) \times (V/Wt) \leq 300 \qquad \text{(formule 6).}$$

**13.** Bandage pneumatique selon l'une quelconque des revendications 1 à 12, dans lequel le pneumatique a un flanc formé en utilisant une composition de caoutchouc ayant une tangente de l'angle de perte (tan $\delta$) de 0,08 ou moins mesurée dans des conditions de température de 70 °C, de fréquence de 10 Hz, de déformation initiale de 5 %, et de taux de déformation dynamique de 1 %.

**14.** Bandage pneumatique selon la revendication 13, dans lequel la composition de caoutchouc formant le flanc a un module d'élasticité complexe (E*:MPa) de 4,0 MPa ou moins mesuré dans des conditions de température de 70 °C, de fréquence de 10 Hz, de déformation initiale de 5 %, et de taux de déformation dynamique de 1 %.

**15.** Bandage pneumatique selon l'une quelconque des revendications 1 à 14, dans lequel le pneumatique a une partie de coussin de jante formée en utilisant une composition de caoutchouc ayant une tangente de l'angle de perte (tan $\delta$) de 0,10 ou moins mesurée dans des conditions de température de 70 °C, de fréquence de 10 Hz, de déformation initiale de 5 %, et de taux de déformation dynamique de 1 %.

**16.** Bandage pneumatique selon la revendication 15, dans lequel la composition de caoutchouc formant la partie de coussin de jante a un module d'élasticité complexe (E*:MPa) de 8,0 MPa ou plus mesuré dans des conditions de température de 70 °C, de fréquence de 10 Hz, de déformation initiale de 5 %, et de taux de déformation dynamique de 1 %.

**17.** Bandage pneumatique selon l'une quelconque des revendications 1 à 16, dans lequel la partie de bande de roulement

a une rainure circonférentielle s'étendant en continu dans la direction circonférentielle de pneumatique, et le rapport de la largeur de rainure $L_{80}$ à une profondeur de 80 % de la profondeur maximale de la rainure circonférentielle, sur la largeur de rainure $L_0$ de la rainure circonférentielle sur la surface en contact avec le sol de la partie de bande de roulement ($L_{80}$ / $L_o$), est de 0,3 à 0,7.

**18.** Bandage pneumatique selon l'une quelconque des revendications 1 à 17, dans lequel la partie de bande de roulement a une pluralité de rainures circonférentielles s'étendant en continu dans la direction circonférentielle de pneumatique, et
l'aire de section transversale totale de la pluralité de rainures circonférentielles est de 10 à 30 % de l'aire de section transversale totale de la partie de bande de roulement.

**19.** Bandage pneumatique selon l'une quelconque des revendications 1 à 18, dans lequel

la partie de bande de roulement a une pluralité de rainures latérales s'étendant dans la direction axiale du pneumatique, et
le volume total de la pluralité de rainures latérales est de 2,0 à 5,0 % du volume de la partie de bande de roulement.

**20.** Bandage pneumatique selon l'une quelconque des revendications 1 à 19, dans lequel Dt est inférieur à 685 (mm), où Dt (mm) est le diamètre extérieur du pneumatique lorsque le pneumatique est installé sur une jante normalisée et que la pression interne est de 250 kPa.

**21.** Bandage pneumatique selon l'une quelconque des revendications 1 à 20, dans lequel la largeur de section transversale Wt (mm) est inférieure à 205 mm.

**22.** Bandage pneumatique selon la revendication 21, dans lequel la largeur de section transversale Wt (mm) est inférieure à 200 mm.

**23.** Bandage pneumatique selon l'une quelconque des revendications 1 à 22, qui est un bandage pneumatique pour une voiture de tourisme.

[FIG.1]

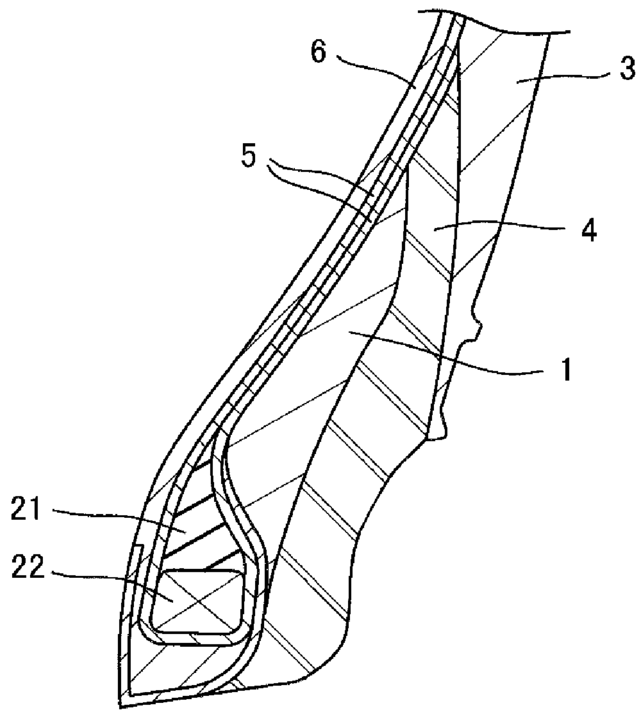

[FIG.2]

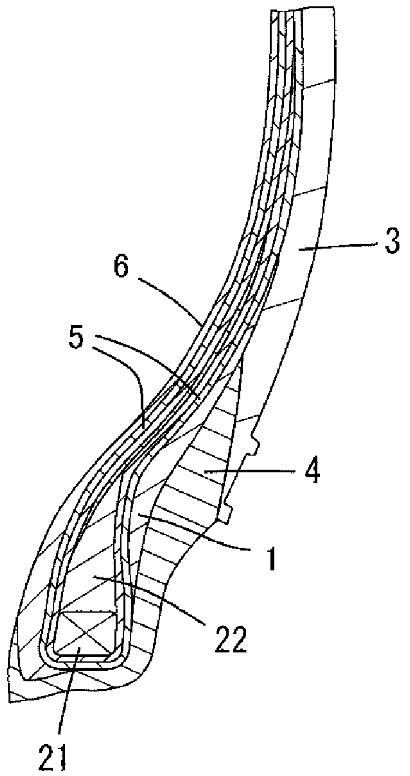

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018178034 A
- JP 2019089911 A
- WO 2018186367 A
- JP 2019206643 A
- US 2017021669 A1
- JP 2017030620 A
- JP 2015160490 A
- JP 2002200905 A
- US 2019047332 A1
- JP 2020093691 A
- EP 3677452 A1
- JP 2010111753 A
- US 4414370 B
- JP 59006207 A
- JP 5058805 B
- JP 1313522 A
- US 5010166 B


### Non-patent literature cited in the description


- *Toa Synthetic Research Annual Report TREND*, 2000 (3), 42-45